# EUROPEAN PATENT APPLICATION

(11) **EP 4 447 441 A1**
(43) Date of publication of application: **16.10.2024**
(21) Application number: 23878963.0
(22) Date of filing: 08.10.2023
(51) Int. Cl.: H04N 19/14

(54) **VIDEO PROCESSING METHOD AND RELATED DEVICE**

(30) Priority: 19.10.2022 CN 202211282417
(71) Applicant: Tencent Technology (Shenzhen) Company Limited, Shenzhen, Guangdong 518057 (CN)
(72) Inventor: LI, Zhicheng, Shenzhen, Guangdong 518057 (CN)
(74) Representative: Nederlandsch Octrooibureau
(86) International application number: PCT/CN2023/123349
(87) International publication number: WO 2024/082971

(57) **Abstract**

The present application provides a video processing method and a related device. Embodiments of the present application can be applied to the field of cloud computing. The method comprises: decomposing an encoding task for an input video into respectively encoding N video frame sequences composing the input video, and during encoding a current video frame sequence, adaptively adjusting an encoding parameter of the current video frame sequence according to at least one of computing power consumed by encoding the previous video frame sequence, a first image attribute of a first video frame image in the current video frame sequence, and a second image attribute of a second video frame image in the previous video frame sequence, so that the adjusted encoding parameter can satisfy encoding requirements of the current video frame sequence, thereby improving frame output stability, and reducing deployment costs of a server.

## Description

This application claims priority to Chinese Patent Application No. 2022112824172, entitled "VIDEO PROCESSING METHOD AND RELATED APPARATUS" filed with the State Intellectual Property Office on October 19, 2022.

### FIELD

This application relates to the field of data processing technologies, and in particular, to video processing technologies.

### BACKGROUND

With the rapid development of the video industry, video applications are rapidly upgrading towards high definition and high frame rates, and there is an increasing demand for video processing. Video encoding is the basis of video processing, and excellent encoding capabilities can provide high-definition and smooth playback experience for products.

Currently, a video encoding kernel is set with fixed encoding parameters in application, and the same encoding parameters are used for video encoding of various input video sources. Encoding parameters affect the frame output stability of the video encoding kernel. When there are a larger number of more complex encoding parameters, the stability of video frame output is higher, but the corresponding computational complexity of the video encoding kernel needs to be high. Scenarios such as live broadcast, real-time video communication, cloud rendering, and cloud desktop have high requirements on the frame output stability of the video encoding kernel. Static pictures with small motion texture changes consume lower encoding computational complexity, while pictures with more complex motion textures and frequent scene switching consume higher encoding computational complexity. The same encoding parameters are used for the video when the same video includes both static pictures with small motion texture changes and pictures with complex motion textures and frequent scene switching. If the encoding parameters are set to be a large number and more complex, server deployment costs are high for static pictures with small motion texture changes. If the encoding parameters are set to be a small number and simpler, computational complexity of video encoding and compression is insufficient for pictures with complex motion textures and frequent scene switching, and the frame output stability of the video encoding kernel is poor.

It can be seen that how to balance server deployment costs and frame output stability is an issue that needs to be solved urgently.

### SUMMARY

Embodiments of this application provide a video processing method and a related apparatus that can adaptively adjust video encoding parameters so that the adjusted encoding parameters meet corresponding encoding requirements, improve frame output stability, and reduce server deployment costs.

According to an aspect of this application, a video processing method is provided, performed by a computer device, including:
obtaining N video frame sequences of an input video, where each video frame sequence includes at least one video frame image, and N is an integer greater than 1;
obtaining, from the N video frame sequences, an i-th video frame sequence and an (i-1)-th video frame sequence adjacent to the i-th video frame sequence, i being an integer greater than 2 and smaller than or equal to N;
obtaining a first video frame image from the i-th video frame sequence, and obtaining a second video frame image from the (i-1)-th video frame sequence, the first video frame image having a first image attribute, and the second video frame image having a second image attribute;
obtaining first computing complexity corresponding to the (i-1)-th video frame sequence, the first computing complexity indicating a minimum amount of computational resources for encoding and/or decoding the respective video frame sequence; and
determining an encoding parameter for encoding the i-th video frame sequence according to one or more or all of the first computing complexity, the first image attribute, and the second image attribute.

According to another aspect of this application, a data processing apparatus is provided, including:
a video frame sequence obtaining module, configured to obtain N video frame sequences of an input video, where each video frame sequence includes at least one video frame image, and N is an integer greater than 1;
a video frame sequence extraction module, configured to obtain, from the N video frame sequences , an i-th video frame sequence and an (i-1)-th video frame sequence adjacent to the i-th video frame sequence, i being an integer greater than 2 and smaller than or equal to N;
a video frame image obtaining module, configured to obtain a first video frame image from the i-th video frame sequence, and obtain a second video frame image from the (i-1)-th video frame sequence, the first video frame image having a first image attribute, and the second video frame image having a second image attribute;
a computational complexity obtaining module, configured to obtain first computational complexity corresponding to the (i-1)-th video frame sequence, the first computational complexity indicating a minimum amount of computational resources for encoding and/or decoding the respective video frame sequence; and
a video encoding parameter determination module, configured to determine an encoding parameter for encoding the i-th video frame sequence according to one or more or all of the first computational complexity, the first image attribute, and the second image attribute.

According to another aspect of this application, a computer device is provided, including:
a memory, a transceiver, a processor, and a bus system,
the memory being configured to store a program;
the processor being configured to execute the program in the memory, to perform the method according to the foregoing aspects; and
the bus system being configured to connect the memory and the processor, causing the memory to communicate with the processor.

According to another aspect of this application, a computer-readable storage medium is provided, the computer-readable storage medium stores instructions, and when being run in a computer, the instructions make the computer execute the method according to the foregoing aspects.

According to another aspect of this application, a computer program product or a computer program is provided, including computer instructions stored in a computer-readable storage medium. A processor of a computer device reads the computer instructions from the computer-readable storage medium, and the processor executes the computer instructions, so that the computer device performs the method according to the foregoing aspects.

According to the foregoing technical solutions, it can be learned that the embodiments of this application have the following advantages:

This application provides a video processing method and a related apparatus. The method includes: obtaining N video frame sequences of an input video, where each video frame sequence includes at least one video frame image; obtaining an i^{th} video frame sequence and an adjacent (i-1)^{th} video frame sequence of the i^{th} video frame sequence from the N video frame sequences; obtaining a first video frame image from the i^{th} video frame sequence, and obtaining a second video frame image from the (i-1)^{th} video frame sequence, the first video frame image corresponding to a first image attribute, and the second video frame image corresponding to a second image attribute; obtaining first computational complexity corresponding to the (i-1)^{th} video frame sequence, where the first computational complexity is used to represent computational complexity consumed to encode and/or decode the (i-1)^{th} video frame sequence; and determining an encoding parameter of the i^{th} video frame sequence according to at least one of the first computational complexity, the first image attribute, and the second image attribute, where the encoding parameter is used to encode the i^{th} video frame sequence. In the video processing method provided by the embodiments of this application, an encoding task of an input video is divided into encoding of N video frame sequences that form the input video; and when encoding a current video frame sequence (that is, the i^{th} video frame sequence), an encoding parameter of the current video frame sequence is adaptively determined according to at least one of computational complexity consumed to encode and/or decode a previous video frame sequence (that is, the (i-1)^{th} video frame sequence), a first image attribute of a first video frame image in the current video frame sequence, and a second image attribute of a second video frame image in the previous video frame sequence. Specifically, in view of ensuring frame output stability, it is adaptively determined, based on the computational complexity consumed to encode and/or decode the previous video frame sequence, and the relationship between the first image attribute and the second image attribute, whether the encoding parameter of the current video frame sequence is maintained unchanged, increased, or reduced relative to the encoding parameter of the previous video frame sequence. In this way, according to the relationship between the image attributes of the video frame images in the two adj acent video frame sequences, based on the computational complexity consumed to encode and/or decode the previous video frame sequence, the encoding parameter of the current video frame sequence is set, so that the determined encoding parameter can satisfy the encoding requirement of the current video frame sequence, to improve frame output stability and reduce server deployment costs.

### BRIEF DESCRIPTION OF THE DRAWINGS

FIG. 1 is a schematic architectural diagram of a video processing system according to an embodiment of this application;
FIG. 2a is a flowchart of a video processing method according to an embodiment of this application;
FIG. 2b is an architectural diagram of a video processing method according to an embodiment of this application;
FIG. 3a is a flowchart of a video processing method according to another embodiment of this application;
FIG. 3b is an architectural diagram of a video processing method according to another embodiment of this application;
FIG. 4 is a schematic diagram of coding unit depth division according to an embodiment of this application;
FIG. 5a is a flowchart of a video processing method according to another embodiment of this application;
FIG. 5b is an architectural diagram of a video processing method according to another embodiment of this application;
FIG. 6 is a schematic diagram of prediction unit depth division according to an embodiment of this application;
FIG. 7a is a flowchart of a video processing method according to another embodiment of this application;
FIG. 7b is an architectural diagram of a video processing method according to another embodiment of this application;
FIG. 8 is a schematic diagram of motion estimation according to an embodiment of this application;
FIG. 9 is a schematic diagram of motion compensation according to an embodiment of this application;
FIG. 10a is a flowchart of a video processing method according to another embodiment of this application;
FIG. 10b is an architectural diagram of a video processing method according to another embodiment of this application;
FIG. 11 is a schematic diagram of transform unit depth division according to an embodiment of this application;
FIG. 12 is a flowchart of a video processing method according to another embodiment of this application;
FIG. 13 is a schematic diagram of encoding a target video frame image according to an embodiment of this application;
FIG. 14 is a flowchart of a video processing method according to another embodiment of this application;
FIG. 15 is a schematic diagram of an encoding framework according to an embodiment of this application;
FIG. 16 is a flowchart of a video processing method according to another embodiment of this application;
FIG. 17 is a flowchart of a video processing method according to another embodiment of this application;
FIG. 18 is a flowchart of a video processing method according to another embodiment of this application;
FIG. 19 is a flowchart of a video processing method according to another embodiment of this application;
FIG. 20 is a schematic structural diagram of a video processing apparatus according to an embodiment of this application;
FIG. 21 is a schematic structural diagram of a video processing apparatus according to another embodiment of this application;
FIG. 22 is a schematic structural diagram of a video processing apparatus according to another embodiment of this application;
FIG. 23 is a schematic structural diagram of a video processing apparatus according to another embodiment of this application;
FIG. 24 is a schematic structural diagram of a video processing apparatus according to another embodiment of this application;
FIG. 25 is a schematic structural diagram of a video processing apparatus according to another embodiment of this application; and
FIG. 26 is a schematic structural diagram of a server according to an embodiment of this application.

### DESCRIPTION OF EMBODIMENTS

The terms such as "first", "second", "third", and "fourth" (if any) in the specification and claims of this application and in the accompanying drawings are used for distinguishing similar objects and not necessarily used for describing any particular order or sequence. Data used in this way is exchangeable in a proper case, so that the embodiments of the present disclosure described herein can be implemented in an order different from the order shown or described herein. In addition, the terms "include", "corresponding to" and any other variants are intended to cover the non-exclusive inclusion. For example, a process, method, system, product, or device that includes a series of operations or units is not necessarily limited to those expressly listed operations or units, but may include other operations or units not expressly listed or inherent to such a process, method, product, or device.

For ease of understanding of the technical solutions described in the embodiments of this application, key concepts in the embodiments of this application are described below first.

Video encoding: Used to convert files in an original video format into files in another video format through a compression technology. The most important codec standards in video streaming transmission are H.261, H.263, and H.264 of the ITU.

H.264 is a new-generation encoding standard known for its high compression, high quality and support for streaming media transmission on multiple networks. Three types of frames are defined in the H.264 protocol. A fully encoded frame is an I frame, a partially encoded frame generated based on the previous I frame is a P frame, and a frame encoded based on previous and next frames is a B frame. Core algorithms used by H.264 are intra-frame compression and inter-frame compression. Intra-frame compression is an algorithm that generates the I frame, and inter-frame compression is an algorithm that generates the B frame and the P frame.

In H.264, images are organized in units of sequences. A sequence is a data stream obtained after encoding an image and starts with the I frame and ends with the next I frame. The first image of a sequence is called an IDR image (an instantaneous decoding refresh image), and IDR images are all I frame images. H.264 introduces the IDR image for decoding resynchronization. When decoding the IDR image, a decoder immediately clears a reference frame queue, outputs or discards all decoded data, searches for a parameter set again, and starts a new sequence. In this way, if a major error occurs in the previous sequence, the resynchronization opportunity is obtained through the IDR image. Data of the image before the IDR image is not used to decode an image after the IDR image. A sequence is a data stream generated by encoding an image with little difference in content. When there are relatively few motion changes, a sequence may be very long, because few motion changes mean that picture content of the image has very few changes. Therefore, one I frame can be encoded, and then a P frame and a B frame are continuously encoded. When there are many motion changes, a sequence can be shorter, for example, includes one I frame and three or four P frames.

IDR frame: In video encoding (H.264/H.265/H.266/AV1 or the like), images are organized in unit of sequences. The first image of a sequence is called an IDR image (an instantaneous decoding refresh image), and IDR images are all I frame images.

I frame: Intra-frame encoding frame. The I frame represents the key frame, and can be understood as the complete preservation of this frame. Decoding may be completed based on only data of this frame (because the frame includes the complete picture).

IDR causes a reference frame list (DPB) to be cleared, while the I frame does not cause this. The IDR frame image needs to be the I frame image, but the I frame image is not necessarily the IDR frame image. There may be many I frame images in a sequence. An image between an image after the I frame image and the I frame image may be used as motion reference for the image after the I frame image.

P frame: Forward predictive encoding frame. The P frame represents a difference between a current frame and a previous key frame (or P frame), and during decoding, a previously-buffered picture is combined with the difference defined by the frame, so as to generate a final picture.

Prediction and reconstruction of a P frame: The I frame is used as the reference frame of the P frame. "A prediction value and a motion vector of a point" of the P frame are found from the I frame, and the prediction difference and the motion vector are selected for transmission together. At a receiving end, a predicted value of "the point" of the P frame is found from the I frame based on the motion vector, and added to the prediction difference to obtain a sample value of "the point" of the P frame, to obtain the complete P frame.

B frame: Bidirectionally predictive interpolation coded frame. The B frame is a bidirectional difference frame, that is, the B frame records a difference between a current frame and a previous or next frame. The B frame may be used as or may not be used as a reference frame of another B frame. To decode the B frame, not only the previously buffered picture needs to be obtained, but also the next picture needs to be decoded, and the previous and next pictures are combined with the data of this frame to obtain the final picture. The B frame has a high compression rate, but central processing unit (CPU) consumption is high during decoding.

Prediction and reconstruction of a B frame: A previous I frame or P frame and a next P frame are used as reference frames of the B frame, a predicted value and two motion vectors of "a point" of the B frame are "found", and the prediction difference and the motion vector are selected for transmission. At a receiving end, a predicted value is "found (calculated)" from the two reference frames based on the motion vector, and added to the difference to obtain a sample value of "the point" of the B frame, to obtain the complete B frame.

Macroblock: Basic unit of encoding. An encoding image needs to be divided into multiple blocks for processing.

Intra-frame prediction: A prediction block is a block formed based on an encoded reconstruction block and a current block.

Intra-frame (Intra-frame) compression is also called spatial compression (Spatial compression). In compression of a frame image, only data of this frame is considered without considering redundant information between adjacent frames, which is similar to static image compression. Intra-frame generally uses a lossy compression algorithm. Since intra-frame compression encodes a complete image, the image can be decoded and displayed independently. Intra-frame compression generally does not achieve a very high compression rate.

Inter-frame prediction: which mainly includes motion estimation (motion search method, motion estimation criteria, sub-pixel interpolation, and motion vector estimation) and motion compensation, and is reference and prediction interpolation compensation on a granular time sequence of a group of pictures (GOP).

An inter-frame (Inter-frame) compression principle is: there is a great correlation between data of adjacent frames, or in other words, there are very few changes between information of adjacent frames. That is, there is redundant information between consecutive video frames or adjacent frames. According to this characteristic, compressing the amount of redundancy between adjacent frames can further improve the compression rate and reduce the compression ratio. Inter-frame compression is also known as temporal compression and performs compression by comparing data between different frames on the timeline.

Inter-frame compression is generally lossless. A frame differencing algorithm is a typical temporal compression method and compares the difference between this frame and an adjacent frame and only records the difference between this frame and the adjacent frame, which can greatly reduce the amount of data.

SAD: Sum of Absolute Difference = SAE(Sum of Absolute Error), that is, the sum of absolute errors.

SATD: Sum of absolute transformed difference (SATD) is summation of absolute values after Hadamard product matrix operation (Hadamard product) transformation.

MC: Motion compensation (MC).

ME: Motion estimation (ME).

Lookahead: The function is to estimate encoding costs of frames that have not been analyzed by a main encoder module, and buffer an encoded reconstructed frame with a configured length before a current encoding evaluation frame, to serve as inter-frame prediction reference evaluation for the current encoding frame.

Bd-rate is one of the main parameters to evaluate the performance of video encoding algorithms, and indicates the change of a bit rate and a peak signal-to-noise ratio (Peak signal-to-noise ratio, PSNR) of a video encoded based on a new algorithm compared to an original algorithm.

GOP: group of pictures, which indicates an interval between two I frames.

Minigop: Within a GOP, there is data of a B frame between two P frames, and the interval between the two P frames is a minigop.

Rate distortion optimization (RDO): Many modes may be selected during the encoding process. Some modes have smaller image distortion, but higher bit rates. Some modes have greater image distortion, but lower bit rates. Related technologies are studying modes that can minimize distortion without exceeding a maximum bit rate (conditional extreme value=>Lagrange multiplier method).

The video industry has developed rapidly in recent years, and video applications are rapidly upgrading in the direction of high definition and high frame rates. With the rapid development of video services such as short videos, e-commerce live broadcast, and real-time cloud rendering, there are more and more demand for video processing. Video encoding is the basis of video processing, and excellent encoding capabilities can provide high-definition and smooth playback experience for products and can greatly improve quality of experience (QoE) and service quality (QoS).

Scenarios such as live broadcast, real-time communication (RTC), cloud rendering, and cloud desktop have high requirements on the frame output stability of the video encoding kernel. The computational complexity of the video encoding kernel is related to the complexity of a video picture. Static pictures with small motion texture changes are easier to compress and consume less encoding computational complexity. However, pictures with complex motion textures consume more compression encoding computational complexity. If the picture texture of the compressed video is complex and scene switching is frequent, the computational complexity consumed for video encoding compression is uneven. Large fluctuation in computational complexity causes large consumption fluctuation of a server CPU for encoding processing. On the one hand, large consumption fluctuation of the CPU has a large impact on the frame output stability of scenes such as live broadcast, real-time communication, cloud rendering, and cloud desktop. On the other hand, this has a relatively high requirement on server deployment costs. For example, if the computational complexity of an encoded video fluctuates greatly, in computational complexity arrangement and scheduling, it is necessary to reserve more computational complexity buffer space to prevent computational complexity fluctuation of video picture scene switching. For example, if a server runs 10 channels of live video encoding streams at the same time, the CPU usage rate during scheduling is controlled within 50% as much as possible. This prevents that the encoding computational complexity consumption fluctuates upwards simultaneously when pictures of these 10 channels of video streams switch to scenes with complex textures simultaneously, causing computational complexity of the server to be overloaded and frame output of video encoding to be unstable.

The existing video encoding kernel sets relevant encoding parameters (for example, encoding complexity, a bit rate, a number of reference frames of lookahead, a KEY GOP size, whether to enable a B frame, a code control mode of encoding, ME, MC related algorithms, or whether pre-processing enables related algorithms) in application. After these encoding parameters are set, when the video source is input for encoding later, some processing algorithms and configurations related to encoding are fixed, such as division of coding units with high computational complexity, MC, ME, transform, pre-processing, lookahead, and so on. The same encoding parameters are used for frame pictures in the video when the same video includes both static pictures with small motion texture changes and pictures with complex motion textures and frequent scene switching. If the encoding parameters are set to be a large number and more complex, server deployment costs are high for static pictures with small motion texture changes. If the encoding parameters are set to be a small number and simpler, computational complexity of video encoding and compression is insufficient for pictures with complex motion textures and frequent scene switching, and the frame output stability of the video encoding kernel is poor.

In the video processing method provided by the embodiments of this application, an encoding task of an input video is divided into encoding of N video frame sequences that form the input video; and when encoding a current video frame sequence (that is, the i^{th} video frame sequence), an encoding parameter of the current video frame sequence is adaptively determined according to at least one of computational complexity consumed to encode and/or decode a previous video frame sequence (that is, the (i-1)^{th} video frame sequence), a first image attribute of a first video frame image in the current video frame sequence, and a second image attribute of a second video frame image in the previous video frame sequence. Specifically, in view of ensuring frame output stability, it is adaptively determined, based on the computational complexity consumed to encode and/or decode the previous video frame sequence, and the relationship between the first image attribute and the second image attribute, whether the encoding parameter of the current video frame sequence is maintained unchanged, increased, or reduced relative to the encoding parameter of the previous video frame sequence. In this way, according to the relationship between the image attributes of the video frame images in the two adjacent video frame sequences, based on the computational complexity consumed to encode and/or decode the previous video frame sequence, the encoding parameter of the current video frame sequence is set, so that the determined encoding parameter can satisfy the encoding requirement of the current video frame sequence, to improve frame output stability and reduce server deployment costs.

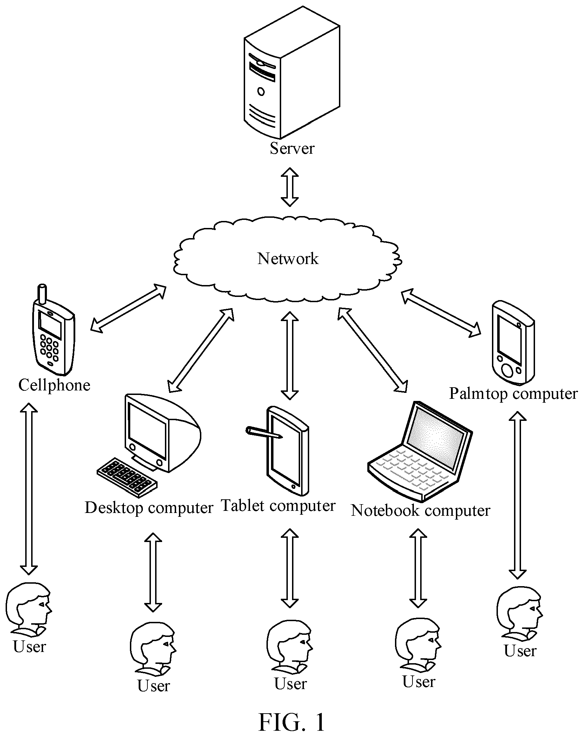

For ease of understanding, refer to FIG. 1. FIG. 1 is an application environment diagram of a video processing method according to an embodiment of this application. As shown in FIG. 1, the video processing method provided by the embodiment of this application is applied to a video processing system. The video processing system includes: a server and a terminal device. The server may be an independent physical server, or a server cluster composed of multiple physical servers or a distributed system, or may be a cloud server that provides basic cloud computing services such as cloud services, cloud databases, cloud computing, cloud functions, cloud storage, and network services, cloud communications, middleware services, domain name services, security services, content delivery networks (CDN), big data, and artificial intelligence platforms. The terminal may be a smartphone, a tablet computer, a notebook computer, a desktop computer, a smart speaker, a smartwatch, or the like, but is not limited thereto. The terminal and the server may be connected directly or indirectly through wired or wireless communication methods, which are not limited in the embodiments of this application.

The server first obtains N video frame sequences of an input video, where each video frame sequence includes at least one video frame image. Secondly, the server obtains an i^{th} video frame sequence and an adjacent (i-1)^{th} video frame sequence of the i^{th} video frame sequence from the N video frame sequences. Then, the server obtains a first video frame image from the i^{th} video frame sequence, and obtains a second video frame image from the (i-1)^{th} video frame sequence, where the first video frame image corresponds to a first image attribute, and the second video frame image corresponds to a second image attribute. Next, the server obtains first computational complexity corresponding to the (i-1)^{th} video frame sequence, where the first computational complexity is used to represent computational complexity consumed to encode the (i-1)^{th} video frame sequence. Then, the server determines an encoding parameter of the i^{th} video frame sequence according to at least one of the first computational complexity corresponding to the (i-1)^{th} video frame sequence, the first image attribute, and the second image attribute, to encode the i^{th} video frame sequence according to the encoding parameter.

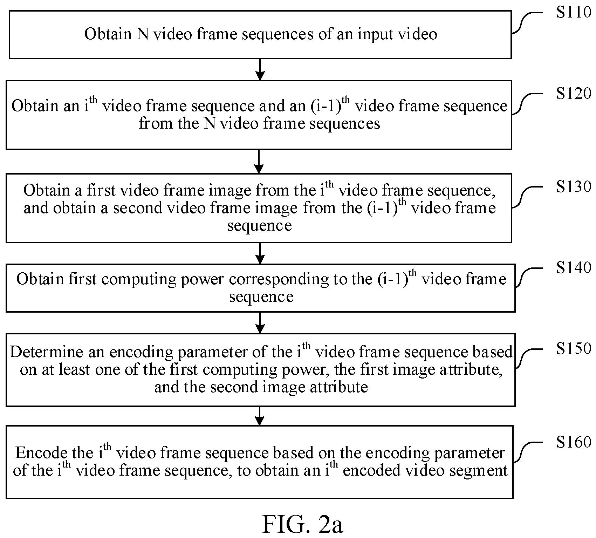

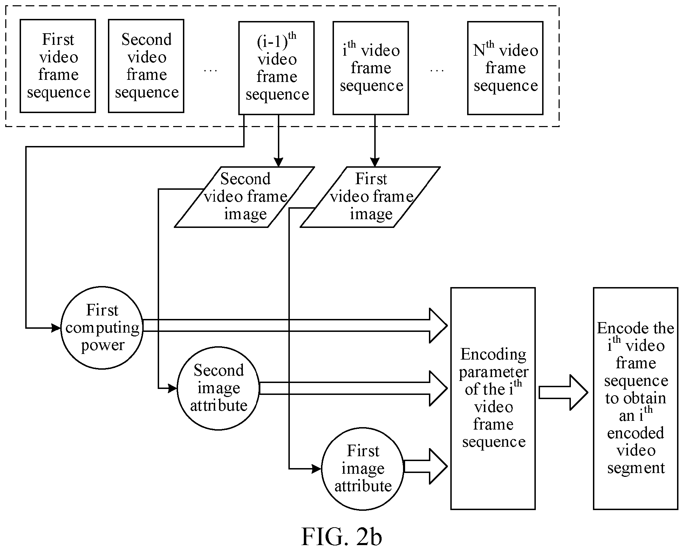

The video processing method in this application is introduced below. The video processing method may be performed by a computer device, which may be a server, for example. Refer to FIG. 2a and FIG. 2b. FIG. 2a is a schematic flowchart of a video processing method according to an embodiment of this application. FIG. 2b is a schematic diagram of an implementation architecture of a video processing method according to an embodiment of this application. The video processing method provided by the embodiments of this application includes: operation S110 to operation S160. Details are as follows:

S110: Obtain N video frame sequences of an input video.

Each video frame sequence includes at least one video frame image, and N is an integer greater than 1.

The input video is a video to be processed or a video to be encoded.

In this embodiment of this application, the computer device configured to perform the method provided by this embodiment of this application can first obtain the input video, and then perform segmentation processing on the input video to obtain the N video frame sequences of the input video. Alternatively, other devices may perform segmentation processing on the input video to obtain the N video frame sequences of the input video, and then transmit the N video frame sequences of the input video to a computer device configured to perform the method provided by this embodiment of this application, so that the computer device obtains the N video frame sequences of the input video. This embodiment of this application does not limit the method of obtaining the N video frame sequences of the input video.

The input video may be segmented through a scene recognition model, the input video may be segmented by setting a fixed time or number of frames, or the input video may be segmented manually. This embodiment of this application does not limit this herein.

Segmenting the input video through the scene recognition model means identifying N scenes in the input video through a trained scene recognition model, segmenting the input video by using scene switching as a video segmentation point, to obtain N sub-video segments, and representing the sub-video segments in the form of video frame sequences. Each video frame sequence includes all frame images in the sub-video segment. The scene recognition model may be a feature extraction classification model based on deep learning and neural networks. Commonly used algorithms include convolutional neural network (CNN), decision trees, random forests, or the like. Taking deep learning as an example, algorithm frameworks such as deep learning CNN or CNN+recurrent neural network (RNN) are used to generate images from video frames, and the images generated from video frames are used as training samples of deep learning related models.

Segmenting the input video by setting a fixed time or number of frames means segmenting the input video based on a set value by presetting a video segmentation time or a number of video segmentation frames, to obtain several segmented sub-video segments, and representing the sub-video segments in the form of video frame sequence. Each video frame sequence includes all frame images in the sub-video segment.

Manually segmenting the input video means segmenting the input video by manually using scene switching in the video as a video segmentation point, to obtain N sub-video segments, and representing the sub-video segments in the form of video frame sequence. Each video frame sequence includes all frame images in the sub-video segment.

For example, the input video includes three scenes: meeting scene, theater scene, and swimming scene. The scene complexity of the meeting scene is simple, the scene complexity of the theater scene is intermediate, and the scene complexity of the swimming scene is complex. A manner of segmenting the input video through the scene recognition model is: the input video is used as the input of the trained scene recognition model, and the scene recognition model recognizes that the input video includes three scenes, outputs three sub-video segments corresponding to the three scenes, and represents each sub-video segment in the form of video frame sequence. A manner of segmenting the input video by setting a fixed time or number of frames is: a video segmentation interval is set as every 15 seconds, and the input video is segmented to obtain several sub-video segments, so that the duration of each sub-video segment is 15 seconds or less than 15 seconds (for example, the duration of the last sub-video segment of the input video may be less than 15seconds). Manually segmenting the input video means segmenting the input video by manually using scene switching in the video as a video segmentation point, the video is segmented when each scene switches, the input video is segmented into three sub-video segments, and each sub-video segment is represented in the form of video frame sequence.

S120: Obtain an i^{th} video frame sequence and an adjacent (i-1)^{th} video frame sequence of the i^{th} video frame sequence from the N video frame sequences.

The i^{th} video frame sequence and the (i-1)^{th} video frame sequence are adjacent in the target video, where i is an integer greater than 2 and smaller than or equal to N , for example, i is a natural number greater than 1 and smaller than or equal to N.

Two consecutive video frame sequences in the time domain are obtained from the N video frame sequences, a video frame sequence earlier in the time domain is regarded as the (i-1)^{th} video frame sequence, and a video frame sequence later in the time domain is regarded as the i^{th} video frame sequence. For example, the target video is segmented into five video frame sequences, the first video frame sequence and the second video frame sequence are obtained, or the second video frame sequence and the third video frame sequence are obtained, or the third video frame sequence and the fourth video frame sequence are obtained, or the fourth video frame sequence and the fifth video frame sequence are obtained.

S130: Obtain a first video frame image from the i^{th} video frame sequence, and obtain a second video frame image from the (i-1)^{th} video frame sequence.

The first video frame image corresponds to the first image attribute, the second video frame image corresponds to the second image attribute, and the first image attribute and the second image attribute are respectively used to represent texture complexity information and/or scene complexity information of the video frame image corresponding to the attribute.

The first video frame image may be an IDR frame in the i^{th} video frame sequence, and the second video frame image may be an IDR frame in the (i-1)^{th} video frame sequence. Each video frame image corresponds to an image attribute, and the image attribute is used to represent the texture complexity information and the scene complexity information of the video frame image. Basic image attributes corresponding to the video frame image may include pixel, resolution, size, color, bit depth, hue, saturation, brightness, color channel, image level, or the like. In this embodiment of this application, the first image attribute and the second image attribute may be at least one of the basic image attributes, or a combination of multiple types, or other forms of attributes determined based on at least one or more basic image attributes, and may represent the texture complexity information and/or scene complexity information of the corresponding video frame image. In addition, the image attributes corresponding to the video frame image may also be represented by a computing resource consumed to decode the video frame image. In some cases, the input video currently to be encoded needs to be obtained through decoding. In the process of decoding to obtain the input video, a computational complexity resource consumed to decode each video frame image may be recorded, and then the image attribute corresponding to the video frame image may be determined based on the resource. When more computational complexity resources are consumed to decode a video frame image, it means that the texture complexity and/or the scene complexity corresponding to the video frame image is higher. That is, as long as the first image attribute and the second image attribute in this embodiment of this application may represent the texture complexity information and/or scene complexity information of the corresponding video frame image, this embodiment of this application does not limit their expression forms.

The first image attribute may be obtained by identifying or extracting the first video frame image after obtaining the first video frame image. Alternatively, the first image attribute may be predetermined and stored information. After obtaining the first video frame image, the first image attribute corresponding to the first video frame image may be retrieved from the stored information. Similarly, the second image attribute may be obtained by identifying or extracting the second video frame image after obtaining the second video frame image. Alternatively, the second image attribute may be predetermined and stored information. After obtaining the second video frame image, the second image attribute corresponding to the second video frame image may be retrieved from the stored information. This embodiment of this application does not limit the method of obtaining the first image attribute and the second image attribute.

Texture complexity information includes simple textures, general textures, intermediate textures and complex textures. When encoding video frame images with simple textures, fewer and simpler encoding parameters may be used for encoding, and less computational complexity is consumed. When encoding video frame images with complex textures, in order to ensure encoding quality (higher frame output stability), a large number of more complex encoding parameters need to be used for encoding, and more computational complexity is consumed.

Texture complexity information analysis methods include: algorithms such as Euclidean distance, statistical histogram, Local Binary Pattern (LBP) detection algorithm, and CNN feature extraction classification, or image complexity estimation methods based on edge features, where commonly used algorithms include canny, sobel, robert and other edge detection operator algorithms. This application is not limited herein.

Take LBP detection algorithm as an example: LBP refers to local binary pattern and is an operator used to describe local features of an image. The LBP feature has significant advantages such as grayscale invariance and rotation invariance. An original LBP operator is defined to be within the 3×3 window, the center pixel of the window is used as a threshold, and grayscale values of adjacent 8 pixels are compared with the threshold. If a value of a surrounding pixel is greater than the value of the central pixel, the position of the pixel is marked as 1; otherwise, the position of the pixel is 0. In this way, 8 pixels in the 3×3 adjacent area may be compared to produce 8-bit binary numbers (usually converted to decimal numbers, that is, LBP codes, a total of 256 types), that is, the LBP value of the center pixel of the window is obtained, and this value is used to reflect the texture information of the area. During detection, the detection area can be automatically adjusted based on the video picture resolution and computational complexity, or the picture resolution is adjusted through downsampling. LBP values of the area for comprehensive picture detection are summarized and calculated. For example, when 80% of the LBP values are all below 50, this indicates simple textures, 50 to 100 indicates general textures, 100 to 150 indicates intermediate textures, and more than 150 indicates complex textures.

Scene complexity information includes simple scenes, general scenes, intermediate scenes, and complex scenes. When encoding video frame images with simple scenes, fewer and simpler encoding parameters may be used for encoding, and less computational complexity is consumed. When encoding video frame images with complex scenes, in order to ensure encoding quality (higher frame output stability), a large number of more complex encoding parameters need to be used for encoding, and more computational complexity is consumed. For example, simple scenes include desktop scenes and conference scenes, general scenes include shows and TV series scenes, intermediate scenes include animation scenes and outdoor scenes, and complex scenes include game scenes and swimming scenes.

A feature extraction classification network based on deep learning and neural networks may be used for scene complexity information to classify scene complexity into four categories: simple scenes, general scenes, intermediate scenes, and complex scenes. Commonly used algorithms are CNNs, decision trees, random forests, or the like.

Taking deep learning as an example, algorithm frameworks such as deep learning CNN or CNN+RNN are used to identify video frame images. Video frame images are used as training samples in deep learning related models. When the training samples are sufficient, the scene recognition accuracy of scenes with clear picture characteristics (for example, game scenes, football scenes, basketball scenes, or animation scenes) can reach 99% or above through a pure CNN network (processing such as convolution layer, filtering, or pooling layer) model. The scene recognition accuracy of scenes with scattered picture characteristics (for example, TV series scenes, outdoor sports scenes, food scenes, or travel scenes) can reach around 90% through time domain + frequency domain analysis based on CNN combined with RNN+LSTM.

S 140: Obtain first computational complexity corresponding to the (i-1)^{th} video frame sequence.

The first computational complexity is used to represent the computational complexity consumed to encode and/or decode the (i-1)^{th} video frame sequence, for example, may be server computational complexity consumed to perform processing such as video encoding, audio encoding, video decoding, or audio decoding on the (i-1)^{th} video frame sequence. Certainly, when the device that performs the above processing on the (i-1)^{th} video frame sequence is another device, the first computational complexity is correspondingly the computational complexity consumed by the device, which is not limited in this embodiment of this application.

The purpose of this embodiment of this application is to perform video encoding on the i^{th} video frame sequences. Before performing video encoding on the i^{th} video frame sequences, the task of performing video encoding on the (i-1)^{th} video frame sequence has been completed, and after completing the task of performing video encoding on the (i-1)^{th} video frame sequence, a server consumption value (a server calculation amount occupied during video encoding) for performing video encoding on the (i-1)^{th} video frame sequence is calculated, and the calculated server consumption value is used as the first computational complexity corresponding to the (i-1)^{th} video frame sequence. Similarly, after performing video encoding on the i^{th} video frame sequences, the second computational complexity consumed to perform video encoding on the i^{th} video frame sequences needs to be calculated. The second computational complexity is used as a factor considered when adjusting the video encoding parameter of the (i+1)^{th} video frame sequence. Similarly, a server consumption value (a server calculation amount occupied during video encoding) for performing video decoding on the (i-1)^{th} video frame sequence may also be calculated, and the calculated server consumption value is used as the first computational complexity corresponding to the (i-1)^{th} video frame sequence.

When the first computational complexity indicates the computational complexity required for decoding the (i-1)^{th} video frame sequence, the first computational complexity may indicate texture complexity and/or scene complexity of the video frame image in the (i-1)^{th} video frame sequence, that is, when the first computational complexity is greater, the texture complexity and/or scene complexity of the video frame image in the (i-1)^{th} video frame sequence is higher.

S150: Determine an encoding parameter of the i^{th} video frame sequence based on at least one of the first computational complexity, the first image attribute, and the second image attribute.

The encoding parameter of the i^{th} video frame sequence is determined based on the video encoding parameter of the (i-1)^{th} video frame sequence according to at least one of the first computational complexity corresponding to the (i-1)^{th} video frame sequence, the first image attribute, and the second image attribute.

If the first computational complexity is greater than the first computational complexity threshold, the encoding parameter of the i^{th} video frame sequence is reduced. The first computational complexity threshold refers to a computational complexity threshold provided by the server for encoding. For example, the first computational complexity threshold provided by the server for encoding may be 1000, and the first computational complexity corresponding to the (i-1)^{th} video frame sequence exceeds 1000. In this case, the computational complexity needs to be reduced when encoding the i^{th} video frame sequence. In order to reduce the computational complexity consumed to encode the i^{th} video frame sequence, the encoding parameter of the i^{th} video frame sequence needs to be reduced.

If the first computational complexity is greater than the second computational complexity threshold and less than the first computational complexity threshold, and the attribute level of the first image attribute is higher than that of the second image attribute, the encoding parameter of the i^{th} video frame sequence is reduced, where the first computational complexity threshold is greater than the second computational complexity threshold. The first computational complexity threshold and the second computational complexity threshold refer to two different computational complexity thresholds provided by the server for encoding. For example, the computational complexity range provided by the server for encoding is 800 to 1000. That is, the first computational complexity threshold may be 1000, the second computational complexity threshold may be 800, and the first computational complexity corresponding to the (i-1)^{th} video frame sequence is 900. The first computational complexity is greater than the second computational complexity threshold and less than the first computational complexity threshold. When the attribute level is higher (higher texture complexity and/or higher scene complexity), the computational complexity required is higher. The attribute level of the first image attribute is greater than that of the second image attribute, which means that the computational complexity required to encode the i^{th} video frame sequence is greater than that required to encode the (i-1)^{th} video frame sequence. In this way, the computational complexity required to encode the i^{th} video frame sequence needs to be reduced. In order to reduce the computational complexity required to encode the i^{th} video frame sequence, the encoding parameter of the i^{th} video frame sequence needs to be reduced.

If the first computational complexity is greater than the second computational complexity threshold and less than the first computational complexity threshold, and the attribute level of the first image attribute is equal to that of the second image attribute, the encoding parameter of the i^{th} video frame sequence is maintained to be the same as that of the (i-1)^{th} video frame sequence. The first computational complexity threshold and the second computational complexity threshold refer to two different computational complexity thresholds provided by the server for encoding. For example, the computational complexity range provided by the server for encoding is 800 to 1000. That is, the first computational complexity threshold may be 1000, the second computational complexity threshold may be 800, and the first computational complexity corresponding to the (i-1)^{th} video frame sequence is 900. The first computational complexity is greater than the second computational complexity threshold and less than the first computational complexity threshold. When the attribute level is higher (higher texture complexity and/or higher scene complexity), the computational complexity required is higher. The attribute level of the first image attribute is equal to that of the second image attribute, which means that the computational complexity required to encode the i^{th} video frame sequence is equal to or close to that required to encode the (i-1)^{th} video frame sequence. In this way, the encoding parameter of the i^{th} video frame sequence does not need to be adjusted.

If the first computational complexity is greater than the second computational complexity threshold and less than the first computational complexity threshold, and the attribute level of the first image attribute is lower than that of the second image attribute, the encoding parameter of the i^{th} video frame sequence is increased. The first computational complexity threshold and the second computational complexity threshold refer to two different computational complexity thresholds provided by the server for encoding. For example, the computational complexity range provided by the server for encoding is 800 to 1000. That is, the first computational complexity threshold may be 1000, the second computational complexity threshold may be 800, and the first computational complexity required to encode the (i-1)^{th} video frame sequence is 900. The first computational complexity is greater than the second computational complexity threshold and less than the first computational complexity threshold. When the attribute level is higher (higher texture complexity and/or higher scene complexity), the computational complexity required is higher. The attribute level of the first image attribute is lower than that of the second image attribute, which means that the computational complexity required to encode the i^{th} video frame sequence is smaller than that required to encode the (i-1)^{th} video frame sequence. To improve encoding quality, the encoding parameter of the i^{th} video frame sequence can be increased.

If the first computational complexity is smaller than the second computational complexity threshold, the encoding parameter of the i^{th} video frame sequence is increased. The second computational complexity threshold refers to a computational complexity threshold provided by the server for encoding. For example, the second computational complexity threshold provided by the server for encoding may be 800, the first computational complexity for encoding the (i-1)^{th} video frame sequence is 700, and the first computational complexity is less than the second computational complexity threshold. To improve encoding quality, the encoding parameter of the i^{th} video frame sequence can be increased.

The encoding parameter may specifically be a video encoding parameter, an audio encoding parameter, or the like. When the encoding parameter is a video encoding parameter, the encoding parameter may include but is not limited to a coding unit division depth, a prediction unit division depth, a motion estimation parameter, a motion compensation parameter, and a transform unit division depth. This embodiment of this application does not limit specific content of the encoding parameter.

S 160: Encode the i^{th} video frame sequence based on the encoding parameter of the i^{th} video frame sequence, to obtain an i^{th} encoded video segment.

Encoding the i^{th} video frame sequence according to the encoding parameter of the i^{th} video frame sequence specifically means encoding all video frame images in the i^{th} video frame sequence according to the encoding parameter of the i^{th} video frame sequence, to obtain an encoded image of each video frame image. All encoded images form the i^{th} encoded video segment.

In this embodiment of this application, operation S 160 is an optional operation. In a possible case, a computer device can execute the above operations S 110 to S 150 to determine the encoding parameter of the i^{th} video frame sequence, and then transmit the encoding parameter to another video encoding device, so that the video encoding device encodes the i^{th} video frame sequence in the input video according to the encoding parameter, to obtain the i^{th} encoded video segment. In another possible case, the same computer device can perform the above operations S 110 to S 160, that is, the same computer device determines the encoding parameter of the i^{th} video frame sequence, and encodes the i^{th} video frame sequence in the input video according to the encoding parameter, to obtain the i^{th} encoded video segment. This embodiment of this application does not limit a subject that executes the encoding process of the i^{th} video frame sequence.

In this embodiment of this application, video data that has not been encoded is called a video frame sequence, and video data that has been encoded is called an encoded video segment. The video frame sequence includes video frame images that are independent of each other, and the encoded video segment includes encoded data corresponding to each video frame image. The encoded data may represent content of the video frame image, or may represent a difference between the video frame image and another adj acent video frame image. Generally, the video frame sequence and the encoded video segment have different formats. The encoded video segment may be understood as a compressed video frame sequence. A file size of the encoded video segment is smaller than that of the video frame sequence.

In the video processing method provided by this embodiment of this application, when the input video is encoded, if the scene in the input video is unique and fixed, the encoding parameter is matched according to the scene, and the input video is encoded based on the matched encoding parameter. In this way, the encoding parameter can meet the encoding requirement of the current video frame sequence, to improve frame output stability and reduce server deployment costs. If the input video includes multiple scenes, the input video is segmented according to scene changes to obtain N video frame sequences, an encoding task of the input video is divided into encoding of N video frame sequences that form the input video; and when encoding a current video frame sequence (that is, the i^{th} video frame sequence), an encoding parameter of the current video frame sequence is adaptively determined according to at least one of computational complexity consumed to encode and/or decode a previous video frame sequence (that is, the (i-1)^{th} video frame sequence), a first image attribute of a first video frame image in the current video frame sequence, and a second image attribute of a second video frame image in the previous video frame sequence. Specifically, in view of ensuring frame output stability, it is adaptively determined, based on the computational complexity consumed to encode and/or decode the previous video frame sequence, and the relationship between the first image attribute and the second image attribute, whether the encoding parameter of the current video frame sequence is maintained unchanged, increased, or reduced relative to the encoding parameter of the previous video frame sequence. In this way, according to the relationship between the image attributes of the video frame images in the two adj acent video frame sequences, based on the computational complexity consumed to encode and/or decode the previous video frame sequence, the encoding parameter of the current video frame sequence is set, so that the determined encoding parameter can satisfy the encoding requirement of the current video frame sequence, to improve frame output stability and reduce server deployment costs.

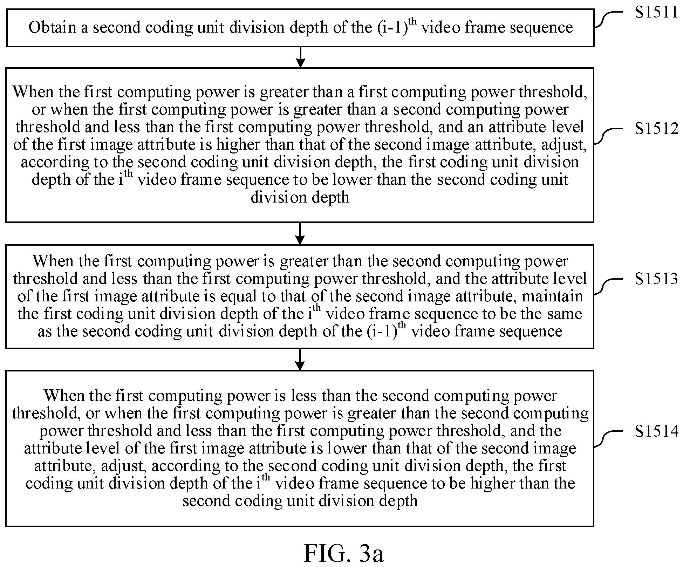

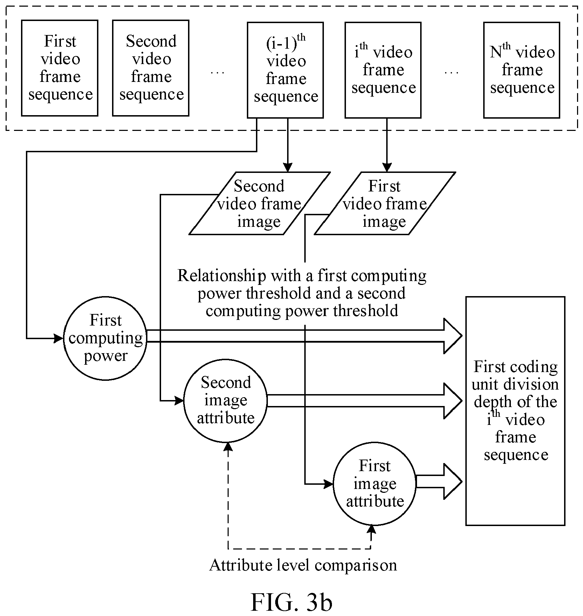

In an optional embodiment of the video processing method provided by the embodiment corresponding to FIG. 2 of this application, referring to FIG. 3a and FIG. 3b, the encoding parameter includes a coding unit division depth. FIG. 3a is a schematic flowchart of determining a coding unit division depth. FIG. 3b is a schematic architectural diagram of determining a coding unit division depth. Operation S150 includes sub-operation S1511 to sub-operation S1514. Details are as follows:

S1511: Obtain a second coding unit division depth of the (i-1)^{th} video frame sequence.

S1512: In a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, adjust, according to the second coding unit division depth, the first coding unit division depth of the i^{th} video frame sequence to be lower than the second coding unit division depth.

S1513: In a case that the first computational complexity is greater than the second computational complexity threshold and less than the first computational complexity threshold, and the attribute level of the first image attribute is equal to that of the second image attribute, maintain the first coding unit division depth of the i^{th} video frame sequence to be the same as the second coding unit division depth of the (i-1)^{th} video frame sequence.

S1514: In a case that the first computational complexity is less than the second computational complexity threshold, or in a case that the first computational complexity is greater than the second computational complexity threshold and less than the first computational complexity threshold, and the attribute level of the first image attribute is lower than that of the second image attribute, adjust, according to the second coding unit division depth, the first coding unit division depth of the i^{th} video frame sequence to be higher than the second coding unit division depth.

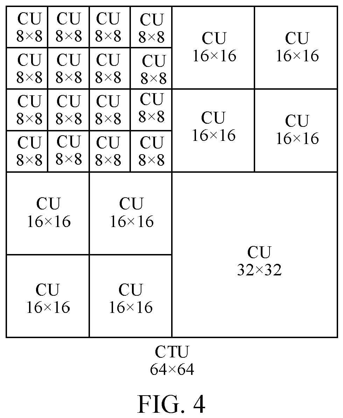

FIG. 4 is a schematic diagram of a coding unit depth division according to an embodiment of this application. When encoding the video frame images in the video frame sequence, the video frame images are sent to an encoder and first divided into encoding tree units (CTU) according to the 64×64 block size, and then depth division is performed on each CTU to obtain a coding unit (CU), that is, the coding unit is a finer-grained unit obtained by performing depth division on the encoding tree unit. Depth division of each CTU adopts a top-down division rule. As shown in table 1, when the depth is 0, that is, depth=0, a size of a CU block is maintained as 64×64, that is, 1 CTU includes 1 64×64 CU block. When the depth is 1, that is, depth=1, the 64×64 CU block is divided into 4 32×32 CU blocks, that is, 1 CTU includes 4 32×32 CU blocks. When the depth is 2, that is, depth=2, each 32×32 CU block is divided into 4 16×16 CU blocks, that is, 1 CTU includes 16 16×16 CU blocks. When the depth is 3, that is, depth=3, each 16×16 CU block is divided into 4 8×8 CU blocks, that is, 1 CTU includes 64 8×8 CU blocks. When the coding unit division depth is greater, the computational complexity required to encode images is greater. When the computational complexity needs to be reduced, the coding unit division depth can be reduced.

**Table 1**

| Encoding unit division depth | Number of CU blocks in 1 CTU | Size of CU block |
|---|---|---|
| depth=0 | 1 | 64×64 |
| depth=1 | 4 | 32×32 |
| depth=2 | 16 | 16×16 |
| depth=3 | 64 | 8×8 |

The schematic diagram of coding unit depth division shown in FIG. 4 and Table 1 is only an example, that is, specific values shown in FIG. 4 and Table 1 are only examples. This embodiment of this application does not specifically limit the division manner of the encoding tree unit and the coding unit.

When one of a condition 1 or a condition 2 is met, the computational complexity for video encoding of the i^{th} video frame sequence needs to be reduced. Condition 1: The first computational complexity is greater than the first computational complexity threshold. Condition 2: The first computational complexity is greater than the second computational complexity threshold and less than the first computational complexity threshold, and the attribute level of the first image attribute is greater than that of the second image attribute. By reducing the coding unit division depth, the computational complexity for video encoding of the i^{th} video frame sequence is reduced.

The first computational complexity threshold and the second computational complexity threshold refer to two different computational complexity thresholds provided for encoding, and can be defined independently according to the computational complexity consumption in actual applications. For example, the computational complexity range provided by the server for encoding is 800 to 1000. That is, the first computational complexity threshold can be set as 1000, and the second computational complexity threshold can be set as 800.

The attribute level is determined based on a corresponding image attribute. When the image attribute is used to represent texture complexity information and/or scene complexity information of a corresponding video frame image, the attribute level is used to represent a texture complexity level and/or a scene complexity level of the video frame image. Generally, when the attribute level is higher, the texture complexity and/or the scene complexity of the corresponding video frame image is higher.

In a possible implementation, the attribute level can be determined based on the video frame image and/or the image attribute of the video frame image through a neural network model. In another possible implementation, the attribute level corresponding to the image attribute can be determined according to the image attribute of the video frame image base on a preset attribute level classification rule. This embodiment of this application does not limit the determination method of the attribute level.

For example, attribute levels of image attributes may include three levels: a first level, a second level, and a third level. When the attribute level is higher, the texture complexity and/or the scene complexity of the corresponding video frame image is higher. Certainly, in actual applications, more or fewer attribute levels can also be obtained through classification, and this embodiment of this application does not limit this.

For example, when encoding the (i-1)^{th} video frame sequence, the coding unit division depth is depth=3, that is, each CTU is divided into 64 8×8 CU blocks. In this case, the first computational complexity consumed to perform video encoding on the (i-1)^{th} video frame sequence exceeds the first computational complexity threshold, and the computational complexity for video encoding of the i^{th} video frame sequence needs to be reduced. In order to reduce the computational complexity for video encoding of the i^{th} video frame sequence, the coding unit division depth for video encoding of the i^{th} video frame sequence is adjusted to depth=2, that is, each CTU is divided into 16 16×16 CU blocks. This meets the requirement of reducing the computational complexity for video encoding of the i^{th} video frame sequence. The coding unit division depth for video encoding of the i^{th} video frame sequence (a first coding unit division depth is depth=2) is lower than that for video encoding of the (i-1)^{th} video frame sequence (a second coding unit division depth is depth=3).

The coding unit division depth for video encoding of the (i-1)^{th} video frame sequence is depth=3, that is, each CTU is divided into 64 8×8 CU blocks. In this case, the first computational complexity consumed to perform video encoding on the (i-1)^{th} video frame sequence is greater than the second computational complexity threshold and less than the first computational complexity threshold, the attribute level of the second video frame image in the (i-1)^{th} video frame sequence is lower than that of the first video frame image in the i^{th} video frame sequence (the texture complexity information and scene complexity information of the first video frame image increase relative to the texture complexity information and scene complexity information of the second video frame image), and the computational complexity consumed to perform video encoding on the i^{th} video frame sequence needs to be reduced. In order to reduce the computational complexity for video encoding of the i^{th} video frame sequence, the coding unit division depth for video encoding of the i^{th} video frame sequence is adjusted to depth=2, that is, each CTU is divided into 16 16×16 CU blocks. This meets the requirement of reducing the computational complexity for video encoding of the i^{th} video frame sequence. The coding unit division depth for video encoding of the i^{th} video frame sequence (a first coding unit division depth is depth=2) is lower than that for video encoding of the (i-1)^{th} video frame sequence (a second coding unit division depth is depth=3).

When a condition 3 is met, there is no need to adjust the computational complexity for video encoding of the i^{th} video frame sequence. Condition 3: The first computational complexity is greater than the second computational complexity threshold and less than the first computational complexity threshold, and the attribute level of the first image attribute is equal to that of the second image attribute. Since there is no need to adjust the computational complexity for video encoding of the i^{th} video frame sequence, the first coding unit division depth of the i^{th} video frame sequence can be maintained to be the same as the second coding unit division depth of the (i-1)^{th} video frame sequence.

For example, the coding unit division depth for video encoding of the (i-1)^{th} video frame sequence is depth=2, that is, each CTU is divided into 16 16×16 CU blocks. In this case, the first computational complexity consumed to perform video encoding on the (i-1)^{th} video frame sequence is greater than the second computational complexity threshold and less than the first computational complexity threshold, the attribute level of the second video frame image in the (i-1)^{th} video frame sequence is equal to that of the first video frame image in the i^{th} video frame sequence (the texture complexity information and scene complexity information of the first video frame image do not change relative to the texture complexity information and scene complexity information of the second video frame image), and the computational complexity consumed to perform video encoding on the i^{th} video frame sequence does not need to be reduced. The first coding unit division depth of the i^{th} video frame sequence can be maintained to be the same as the second coding unit division depth of the (i-1)^{th} video frame sequence. That is, the coding unit division depth for video encoding of the i^{th} video frame sequence is depth=2, that is, each CTU is divided into 16 16×16 CU blocks.

When one of a condition 4 or a condition 5 is met, in order to improve the frame output stability, the computational complexity for video encoding of the i^{th} video frame sequence can be increased. Condition 4: The first computational complexity is less than the second computational complexity threshold. Condition 5: The first computational complexity is greater than the second computational complexity threshold and less than the first computational complexity threshold, and the attribute level of the first image attribute is lower than that of the second image attribute. By increasing the coding unit division depth, the computational complexity for video encoding of the i^{th} video frame sequence is increased.

For example, when encoding the (i-1)^{th} video frame sequence, the coding unit division depth is depth=2, that is, each CTU is divided into 16 16×16 CU blocks. In this case, the first computational complexity consumed to perform video encoding on the (i-1)^{th} video frame sequence is less than the second computational complexity threshold, and in order to improve the frame output stability, the computational complexity for video encoding of the i^{th} video frame sequence can be increased. In order to increase the computational complexity for video encoding of the i^{th} video frame sequence, the coding unit division depth for video encoding of the i^{th} video frame sequence is adjusted to depth=3, that is, each CTU is divided into 64 8×8 CU blocks. This meets the requirement of increasing the computational complexity for video encoding of the i^{th} video frame sequence. The coding unit division depth for video encoding of the i^{th} video frame sequence (a first coding unit division depth is depth=3) is higher than that for video encoding of the (i-1)^{th} video frame sequence (a second coding unit division depth is depth=2).

The coding unit division depth for video encoding of the (i-1)^{th} video frame sequence is depth=2, that is, each CTU is divided into 16 16×16 CU blocks. In this case, the first computational complexity consumed to perform video encoding on the (i-1)^{th} video frame sequence is greater than the second computational complexity threshold and less than the first computational complexity threshold, and the attribute level of the second video frame image in the (i-1)^{th} video frame sequence is higher than that of the first video frame image in the i^{th} video frame sequence (the texture complexity information and scene complexity information of the first video frame image are reduced relative to the texture complexity information and scene complexity information of the second video frame image). In order to improve the frame output stability, the computational complexity for video encoding of the i^{th} video frame sequence can be increased, that is, the coding unit division depth for video encoding of the i^{th} video frame sequence is adjusted to depth=3, that is, each CTU is divided into 64 8×8 CU blocks. This meets the requirement of increasing the computational complexity for video encoding of the i^{th} video frame sequence. The coding unit division depth for video encoding of the i^{th} video frame sequence (a first coding unit division depth is depth=3) is higher than that for video encoding of the (i-1)^{th} video frame sequence (a second coding unit division depth is depth=2).

In the method provided by this embodiment of this application, when encoding a current video frame sequence, a coding unit division depth of the current video frame sequence is adaptively adjusted according to at least one of server computational complexity consumed to encode a previous video frame sequence, a first image attribute of a first video frame image in the current video frame sequence, and a second image attribute of a second video frame image in the previous video frame sequence, so that the adjusted coding unit division depth can meet the encoding requirement of the current video frame sequence, to improve frame output stability and reduce server deployment costs.

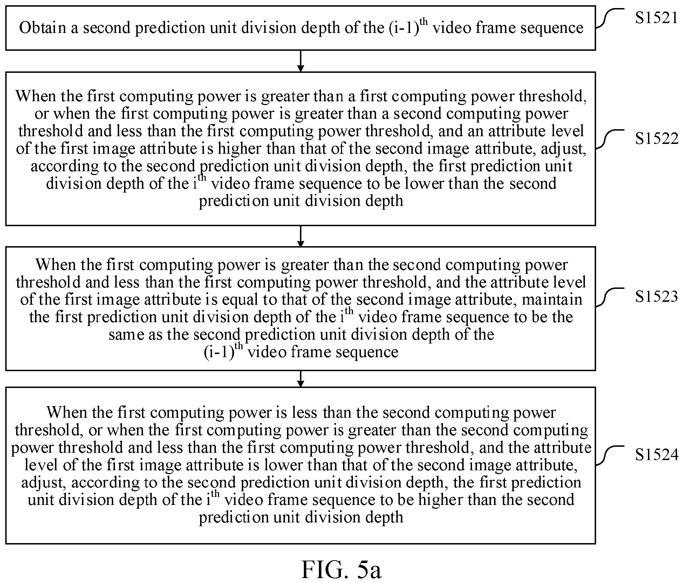

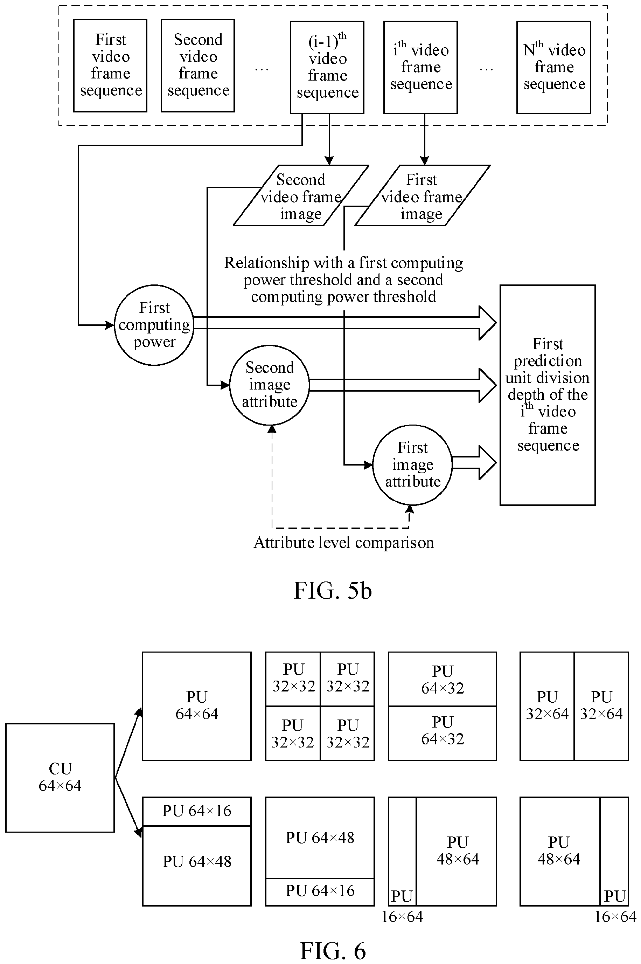

In an optional embodiment of the video processing method provided by the embodiment corresponding to FIG. 2 of this application, referring to FIG. 5a and FIG. 5b, the encoding parameter includes a prediction unit division depth. FIG. 5a is a schematic flowchart of determining a prediction unit division depth. FIG. 5b is a schematic architectural diagram of determining a prediction unit division depth. Operation S150 includes sub-operation S1521 to sub-operation S1524. Details are as follows:

S1521: Obtain a second prediction unit division depth of the (i-1)^{th} video frame sequence.

S1522: In a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, adjust, according to the second prediction unit division depth, the first prediction unit division depth of the i^{th} video frame sequence to be lower than the second prediction unit division depth.

S1523: In a case that the first computational complexity is greater than the second computational complexity threshold and less than the first computational complexity threshold, and the attribute level of the first image attribute is equal to that of the second image attribute, maintain the first prediction unit division depth of the i^{th} video frame sequence to be the same as the second prediction unit division depth of the (i-1)^{th} video frame sequence.

S1524: In a case that the first computational complexity is less than the second computational complexity threshold, or in a case that the first computational complexity is greater than the second computational complexity threshold and less than the first computational complexity threshold, and the attribute level of the first image attribute is lower than that of the second image attribute, adjust, according to the second prediction unit division depth, the first prediction unit division depth of the i^{th} video frame sequence to be higher than the second prediction unit division depth.

FIG. 6 is a schematic diagram of a prediction unit depth division according to an embodiment of this application. When encoding the video frame images in the video frame sequence, the video frame images are sent to an encoder and first divided into encoding tree units (CTU) according to the 64×64 block size, and then depth division is performed on each CTU to obtain a coding unit (CU). Each coding unit (CU) includes a prediction unit (PU) and a transform unit (TU), that is, the prediction unit is a finer-grained unit obtained by performing depth division on the coding unit.

The depth division of each CU adopts a top-down division rule. When the depth is 0, that is, depth=0, a size of a prediction unit (PU) in each CU is maintained to be equal to that of a transform unit (TU). For example, if the size of the CU block is 64×64, the size of the PU is also 64×64. If the size of the CU block is 32×32, the size of the PU is also 32×32. If the size of the CU block is 16×16, the size of the PU is also 16×16. If the size of the CU block is 8×8, the size of the PU is also 8×8. When the depth is 1, that is, depth=1, the CU block is divided into 2 PU blocks. In this case, the division method includes 2 types of even divisions and 4 types of uneven divisions. For example, the size of the CU block is 64×64. If the block is divided evenly, the sizes of the two PUs are both 64×32, or the sizes of the two PUs are both 32×64. If the block is unevenly divided, the sizes of the two PUs are respectively 64×16 and 64×48, or the sizes of the two PUs are respectively 64×48 and 64×16, or the sizes of the two PUs are respectively 16×64 and 48×64, or the sizes of the two PUs are respectively 48×64 and 16×64. When the depth is 2, that is, depth=2, the CU block is divided into 4 PU blocks, for example, if the size of the CU block is 64×64, the size of the PU is 32×32, if the size of the CU block is 32×32, the size of the PU is 16×16, if the size of the CU block is 16×16, the size of the PU is 8×16, and if the size of the CU block is 8×8, the size of the PU is 4×4. When the prediction unit division depth is greater, the computational complexity required to encode images is greater. When the computational complexity needs to be reduced, the prediction unit division depth can be reduced.

The schematic diagram of prediction unit depth division shown in FIG. 6 is only an example, that is, specific values shown in FIG. 6 are only examples. This embodiment of this application does not specifically limit the division manner of the coding unit and the prediction unit.

When one of a condition 1 or a condition 2 is met, the computational complexity for video encoding of the i^{th} video frame sequence needs to be reduced. Condition 1: The first computational complexity is greater than the first computational complexity threshold. Condition 2: The first computational complexity is greater than the second computational complexity threshold and less than the first computational complexity threshold, and the attribute level of the first image attribute is greater than that of the second image attribute. By reducing the prediction unit division depth, the computational complexity for video encoding of the i^{th} video frame sequence is reduced.

The explanation of the first computational complexity threshold and the second computational complexity threshold has been introduced above. For details, refer to the relevant introduction above. Similarly, the explanation of attribute levels has been introduced above. For details, refer to the relevant introduction above.

For example, when encoding the (i-1)^{th} video frame sequence, the prediction unit division depth is depth=2, that is, each CU is divided into 4 PU blocks. In this case, the first computational complexity consumed to perform video encoding on the (i-1)^{th} video frame sequence exceeds the first computational complexity threshold, and the computational complexity for video encoding of the i^{th} video frame sequence needs to be reduced. In order to reduce the computational complexity for video encoding of the i^{th} video frame sequence, the prediction unit division depth for video encoding of the i^{th} video frame sequence is adjusted to depth=1, that is, each CU is divided into 2 PU blocks. This meets the requirement of reducing the computational complexity for video encoding of the i^{th} video frame sequence. The prediction unit division depth for video encoding of the i^{th} video frame sequence (a first prediction unit division depth is depth=1) is lower than that for video encoding of the (i-1)^{th} video frame sequence (a second prediction unit division depth is depth=2).

The prediction unit division depth for video encoding of the (i-1)^{th} video frame sequence is depth=2, that is, each CU is divided into 4 PU blocks. In this case, the first computational complexity consumed to perform video encoding on the (i-1)^{th} video frame sequence is greater than the second computational complexity threshold and less than the first computational complexity threshold, the attribute level of the second video frame image in the (i-1)^{th} video frame sequence is lower than that of the first video frame image in the i^{th} video frame sequence (the texture complexity information and scene complexity information of the first video frame image increase relative to the texture complexity information and scene complexity information of the second video frame image), and the computational complexity consumed to perform video encoding on the i^{th} video frame sequence needs to be reduced. In order to reduce the computational complexity for video encoding of the i^{th} video frame sequence, the prediction unit division depth for video encoding of the i^{th} video frame sequence is adjusted to depth=1, that is, each CU is divided into 2 PU blocks. This meets the requirement of reducing the computational complexity for video encoding of the i^{th} video frame sequence. The prediction unit division depth for video encoding of the i^{th} video frame sequence (a first prediction unit division depth is depth=1) is lower than that for video encoding of the (i-1)^{th} video frame sequence (a second prediction unit division depth is depth=2).

When a condition 3 is met, there is no need to adjust the computational complexity for video encoding of the i^{th} video frame sequence. Condition 3: The first computational complexity is greater than the second computational complexity threshold and less than the first computational complexity threshold, and the attribute level of the first image attribute is equal to that of the second image attribute. Since there is no need to adjust the computational complexity for video encoding of the i^{th} video frame sequence, the first prediction unit division depth of the i^{th} video frame sequence can be maintained to be the same as the second prediction unit division depth of the (i-1)^{th} video frame sequence.

For example, the prediction unit division depth for video encoding of the (i-1)^{th} video frame sequence is depth=1, that is, each CU is divided into 2 PU blocks. In this case, the first computational complexity consumed to perform video encoding on the (i-1)^{th} video frame sequence is greater than the second computational complexity threshold and less than the first computational complexity threshold, the attribute level of the second video frame image in the (i-1)^{th} video frame sequence is equal to that of the first video frame image in the i^{th} video frame sequence (the texture complexity information and scene complexity information of the first video frame image do not change relative to the texture complexity information and scene complexity information of the second video frame image), and the computational complexity consumed to perform video encoding on the i^{th} video frame sequence does not need to be reduced. The first prediction unit division depth of the i^{th} video frame sequence can be maintained to be the same as the second prediction unit division depth of the (i-1)^{th} video frame sequence. That is, the prediction unit division depth for video encoding of the i^{th} video frame sequence is depth=1, that is, each CU is divided into 2 PU blocks.

When one of a condition 4 or a condition 5 is met, in order to improve the frame output stability, the computational complexity for video encoding of the i^{th} video frame sequence can be increased. Condition 4: The first computational complexity is less than the second computational complexity threshold. Condition 5: The first computational complexity is greater than the second computational complexity threshold and less than the first computational complexity threshold, and the attribute level of the first image attribute is lower than that of the second image attribute. By increasing the prediction unit division depth, the computational complexity for video encoding of the i^{th} video frame sequence is increased.

For example, when encoding the (i-1)^{th} video frame sequence, the prediction unit division depth is depth=0, that is, each CU is divided into 1 PU block. In this case, the first computational complexity consumed to perform video encoding on the (i-1)^{th} video frame sequence is less than the second computational complexity threshold, and in order to improve the frame output stability, the computational complexity for video encoding of the i^{th} video frame sequence can be increased. In order to increase the computational complexity for video encoding of the i^{th} video frame sequence, the prediction unit division depth for video encoding of the i^{th} video frame sequence is adjusted to depth=1, that is, each CU is divided into 2 PU blocks. This meets the requirement of increasing the computational complexity for video encoding of the i^{th} video frame sequence. The prediction unit division depth for video encoding of the i^{th} video frame sequence (a first prediction unit division depth is depth=1) is higher than that for video encoding of the (i-1)^{th} video frame sequence (a second prediction unit division depth is depth=0).

The prediction unit division depth for video encoding of the (i-1)^{th} video frame sequence is depth=0, that is, each CU is divided into 1 PU blocks. In this case, the first computational complexity consumed to perform video encoding on the (i-1)^{th} video frame sequence is greater than the second computational complexity threshold and less than the first computational complexity threshold, the attribute level of the second video frame image in the (i-1)^{th} video frame sequence is higher than that of the first video frame image in the i^{th} video frame sequence (the texture complexity information and scene complexity information of the first video frame image are reduced relative to the texture complexity information and scene complexity information of the second video frame image). In order to improve the frame output stability, the computational complexity for video encoding of the i^{th} video frame sequence can be increased, that is, the prediction unit division depth for video encoding of the i^{th} video frame sequence is adjusted to depth=1, that is, each CU is divided into 2 PU blocks. This meets the requirement of increasing the computational complexity for video encoding of the i^{th} video frame sequence. The prediction unit division depth for video encoding of the i^{th} video frame sequence (a first prediction unit division depth is depth=1) is higher than that for video encoding of the (i-1)^{th} video frame sequence (a second prediction unit division depth is depth=0).

In the method provided by this embodiment of this application, when encoding a current video frame sequence, a prediction unit division depth of the current video frame sequence is adaptively adjusted according to at least one of server computational complexity consumed to encode a previous video frame sequence, a first image attribute of a first video frame image in the current video frame sequence, and a second image attribute of a second video frame image in the previous video frame sequence, so that the adjusted prediction unit division depth can meet the encoding requirement of the current video frame sequence, to improve frame output stability and reduce server deployment costs.

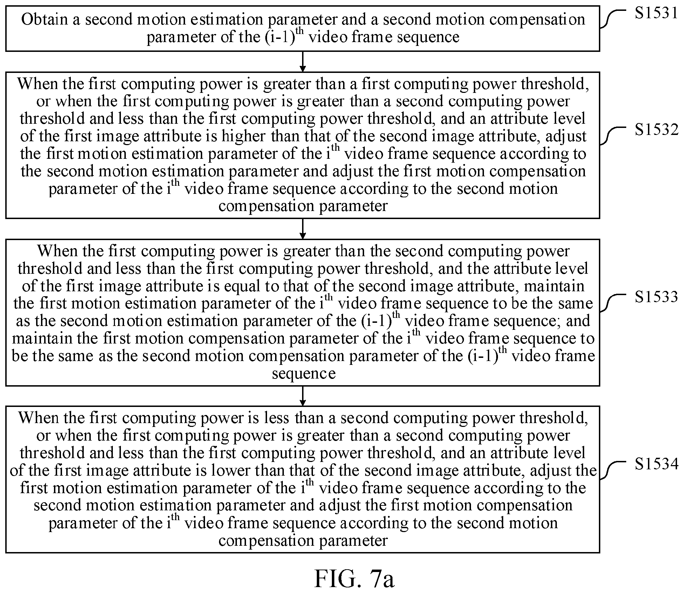

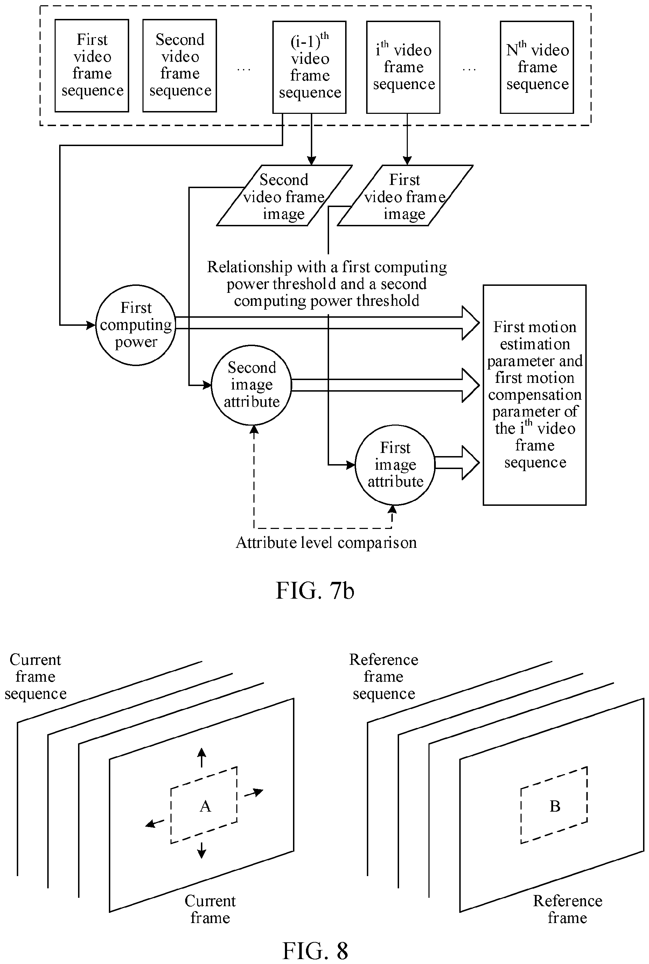

In an optional embodiment of the video processing method provided by this embodiment corresponding to FIG. 2 of this application, referring to FIG. 7a and FIG. 7b, the encoding parameter includes a motion estimation parameter and a motion compensation parameter. FIG. 7a is a schematic flowchart of a process of determining a motion estimation parameter and a motion compensation parameter. FIG. 7b is a schematic architectural diagram of determining a motion estimation parameter and a motion compensation parameter. Operation S150 includes sub-operation S1531 to sub-operation S1532. Details are as follows:

S1531: Obtain a second motion estimation parameter and a second motion compensation parameter of the (i-1)^{th} video frame sequence.

S1532: In a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, adjust the first motion estimation parameter of the i^{th} video frame sequence according to the second motion estimation parameter and adjust the first motion compensation parameter of the i^{th} video frame sequence according to the second motion compensation parameter.

The first motion estimation parameter is determined based on a first maximum pixel range that is used for motion search control and a first sub-pixel estimation complexity, the second motion estimation parameter is determined based on a second maximum pixel range that is used for motion search control and a second sub-pixel estimation complexity, the first maximum pixel range is smaller than the second maximum pixel range, and the first sub-pixel estimation complexity is smaller than the second sub-pixel estimation complexity; the first motion compensation parameter is determined based on a first search range, and the second motion compensation parameter is determined based on a second search range; and the first search range is smaller than the second search range.

S1533: In a case that the first computational complexity is greater than the second computational complexity threshold and less than the first computational complexity threshold, and the attribute level of the first image attribute is equal to that of the second image attribute, maintain the first motion estimation parameter of the i^{th} video frame sequence to be the same as the second motion estimation parameter of the (i-1)^{th} video frame sequence; and maintain the first motion compensation parameter of the i^{th} video frame sequence to be the same as the second motion compensation parameter of the (i-1)^{th} video frame sequence.

The first motion estimation parameter is determined based on a first maximum pixel range that is used for motion search control and a first sub-pixel estimation complexity, the second motion estimation parameter is determined based on a second maximum pixel range that is used for motion search control and a second sub-pixel estimation complexity, the first maximum pixel range is equal to the second maximum pixel range, and the first sub-pixel estimation complexity is equal to the second sub-pixel estimation complexity; and the first motion compensation parameter is determined based on a first search range, and the second motion compensation parameter is determined based on a second search range; and the first search range is equal to the second search range.

S1534: When the first computational complexity is less than a second computational complexity threshold, or when the first computational complexity is greater than a second computational complexity threshold and less than the first computational complexity threshold, and an attribute level of the first image attribute is lower than that of the second image attribute, adjust the first motion estimation parameter of the i^{th} video frame sequence according to the second motion estimation parameter and adjust the first motion compensation parameter of the i^{th} video frame sequence according to the second motion compensation parameter.

The first motion estimation parameter is determined based on a first maximum pixel range that is used for motion search control and a first sub-pixel estimation complexity, the second motion estimation parameter is determined based on a second maximum pixel range that is used for motion search control and a second sub-pixel estimation complexity, the first maximum pixel range is greater than the second maximum pixel range, and the first sub-pixel estimation complexity is greater than the second sub-pixel estimation complexity; and the first motion compensation parameter is determined based on a first search range, and the second motion compensation parameter is determined based on a second search range; and the first search range is larger than the second search range.

FIG. 8 is a schematic diagram of motion estimation according to an embodiment of this application. Motion estimation is to search for a suitable matching area (B) in a reference frame for an area (A) of a current frame, and the motion estimation parameter is correspondingly a search parameter for searching for a matching area in a reference frame for an area of the current frame. The reference frame can be a frame before the current frame or a frame after the current frame. The motion estimation parameter includes a maximum pixel range that is used for motion search control and a sub-pixel estimation complexity. The maximum pixel range that is used for motion search control is a control maximum motion search range in unit of pixel, including: diamond (DIA), hexagon (hex), uneven multi-hex (umh), exhaustive (esa), and transformed exhaustive (tesa). The computational complexity required by DIA, hex, umh, esa, and tesa is in ascending order, for example, DIA consumes the least computational complexity and tesa consumes the most computational complexity. Sub-pixel estimation complexity is used to represent the complexity of motion estimation, and is divided into a total of 11 levels of 0 to 10. When the complexity is higher, more computational complexity is consumed, for example, the computational complexity consumed by the sub-pixel estimation complexity 10 is greater than the computational complexity consumed by the sub-pixel estimation complexity 0.

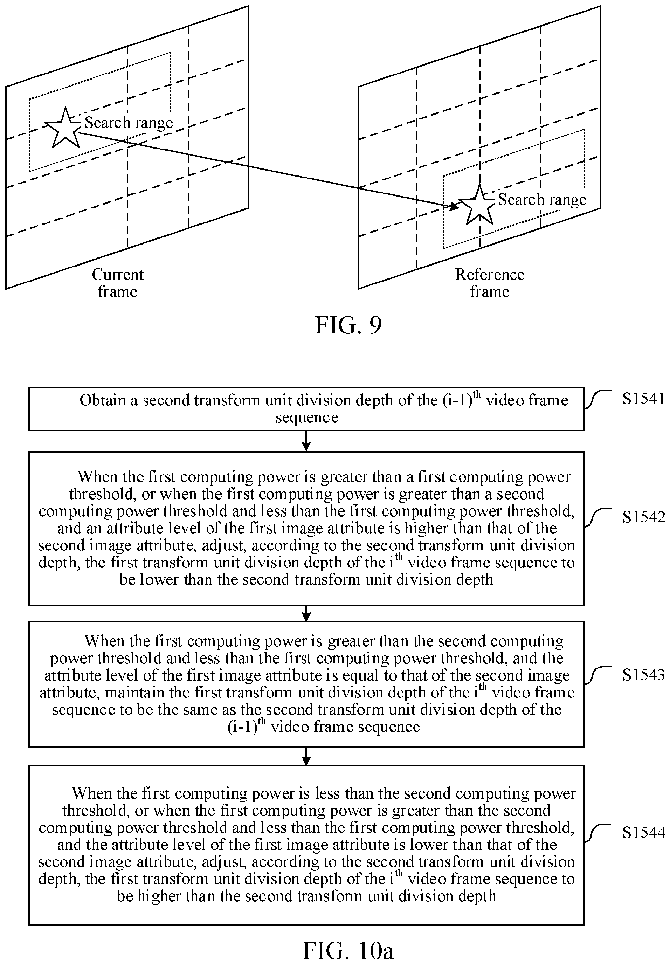

FIG. 9 is a schematic diagram of motion compensation according to an embodiment of this application. The purpose of motion compensation is to find the difference between the area A and the area B. The motion compensation parameter includes a search range. When the search range is larger, more computational complexity is consumed. Predictive encoding through motion compensation and motion estimation produces some motion vectors and residuals. The motion vectors are motion trajectories of areas with respect to a reference frame, and the residual is the difference between the predicted frame and the current frame generated after motion of these areas.

When one of a condition 1 or a condition 2 is met, the computational complexity for video encoding of the i^{th} video frame sequence needs to be reduced. Condition 1: The first computational complexity is greater than the first computational complexity threshold. Condition 2: The first computational complexity is greater than the second computational complexity threshold and less than the first computational complexity threshold, and the attribute level of the first image attribute is greater than that of the second image attribute. By reducing the first motion estimation parameter and the first motion compensation parameter of the i^{th} video frame sequence, computational complexity for video encoding of the i^{th} video frame sequence can be reduced.

For example, the second motion estimation parameter for video encoding of the (i-1)^{th} video frame sequence includes that the second maximum pixel range that is used for motion search control is tesa, and the second sub-pixel estimation complexity is level 10. In this case, the first computational complexity for video encoding of the (i-1)^{th} video frame sequence exceeds the first computational complexity threshold, and the computational complexity for video encoding of the i^{th} video frame sequence needs to be reduced. In order to reduce the computational complexity for video encoding of the i^{th} video frame sequence, the first motion estimation parameter for video encoding of the i^{th} video frame sequence is adjusted so that the first maximum pixel range that is used for motion search control is umh, and the first sub-pixel estimation complexity is level 8. This meets the requirement of reducing the computational complexity for video encoding of the i^{th} video frame sequence. The first maximum pixel range (umh) is smaller than the second maximum pixel range (tesa), and the first sub-pixel estimation complexity (level 8) is lower than the second sub-pixel estimation complexity (level 10). At the same time, the first motion compensation parameter for video encoding of the i^{th} video frame sequence is reduced, so that the first search range in the first motion compensation parameter is smaller than the second search range in the second motion compensation parameter for video encoding of the (i-1)^{th} video frame sequence.

For example, the second motion estimation parameter for video encoding of the (i-1)^{th} video frame sequence includes that the second maximum pixel range that is used for motion search control is tesa, and the second sub-pixel estimation complexity is level 10. In this case, the first computational complexity for video encoding of the (i-1)^{th} video frame sequence is greater than the second computational complexity threshold and less than the first computational complexity threshold, the attribute level of the second video frame image in the (i-1)^{th} video frame sequence is lower than that of the first video frame image in the i^{th} video frame sequence (the texture complexity information and scene complexity information of the first video frame image increase relative to the texture complexity information and scene complexity information of the second video frame image), and the computational complexity consumed to perform video encoding on the i^{th} video frame sequence needs to be reduced. In order to reduce the computational complexity for video encoding of the i^{th} video frame sequence, the first motion estimation parameter for video encoding of the i^{th} video frame sequence is adjusted so that the first maximum pixel range that is used for motion search control is umh, and the first sub-pixel estimation complexity is level 8. This meets the requirement of reducing the computational complexity for video encoding of the i^{th} video frame sequence. The first maximum pixel range (umh) is smaller than the second maximum pixel range (tesa), and the first sub-pixel estimation complexity (level 8) is lower than the second sub-pixel estimation complexity (level 10). At the same time, the first motion compensation parameter for video encoding of the i^{th} video frame sequence is reduced, so that the first search range in the first motion compensation parameter is smaller than the second search range in the second motion compensation parameter for video encoding of the (i-1)^{th} video frame sequence.

When a condition 3 is met, there is no need to adjust the computational complexity for video encoding of the i^{th} video frame sequence. Condition 3: The first computational complexity is greater than the second computational complexity threshold and less than the first computational complexity threshold, and the attribute level of the first image attribute is equal to that of the second image attribute. Since there is no need to adjust the computational complexity for video encoding of the i^{th} video frame sequence, the first motion estimation parameter of the i^{th} video frame sequence can be maintained to be the same as the second motion estimation parameter of the (i-1)^{th} video frame sequence, and the first motion compensation parameter of the i^{th} video frame sequence can be maintained to be the same as the second motion compensation parameter of the (i-1)^{th} video frame sequence.

For example, the second motion estimation parameter for video encoding of the (i-1)^{th} video frame sequence includes that the second maximum pixel range that is used for motion search control is esa, and the second sub-pixel estimation complexity is level 9. In this case, the first computational complexity for video encoding of the (i-1)^{th} video frame sequence is greater than the second computational complexity threshold and less than the first computational complexity threshold, the attribute level of the second video frame image in the (i-1)^{th} video frame sequence is equal to that of the first video frame image in the i^{th} video frame sequence (the texture complexity information and scene complexity information of the first video frame image do not change relative to the texture complexity information and scene complexity information of the second video frame image), and the computational complexity consumed to perform video encoding on the i^{th} video frame sequence does not need to be reduced. The first motion estimation parameter of the i^{th} video frame sequence can be maintained to be the same as the second motion estimation parameter of the (i-1)^{th} video frame sequence; and the first motion compensation parameter of the i^{th} video frame sequence can be maintained to be the same as the second motion compensation parameter of the (i-1)^{th} video frame sequence. That is, the first motion estimation parameter for video encoding of the i^{th} video frame sequence includes that the first maximum pixel range that is used for motion search control is esa, and the first sub-pixel estimation complexity is level 9. At the same time, the first search range in the first motion compensation parameter is maintained to be the same as the second search range in the second motion compensation parameter for video encoding of the (i-1)^{th} video frame sequence.

When one of a condition 4 or a condition 5 is met, in order to improve the frame output stability, the computational complexity for video encoding of the i^{th} video frame sequence can be increased. Condition 4: The first computational complexity is less than the second computational complexity threshold. Condition 5: The first computational complexity is greater than the second computational complexity threshold and less than the first computational complexity threshold, and the attribute level of the first image attribute is lower than that of the second image attribute. By increasing the first motion estimation parameter and the first motion compensation parameter of the i^{th} video frame sequence, the computational complexity for video encoding of the i^{th} video frame sequence is increased.

For example, the second motion estimation parameter for video encoding of the (i-1)^{th} video frame sequence includes that the second maximum pixel range that is used for motion search control is umh, and the second sub-pixel estimation complexity is level 8. In this case, the first computational complexity for video encoding of the (i-1)^{th} video frame sequence is less than the second computational complexity threshold, and in order to improve the frame output stability, the computational complexity for video encoding of the i^{th} video frame sequence can be increased. In order to increase the computational complexity for video encoding of the i^{th} video frame sequence, the first motion estimation parameter for video encoding of the i^{th} video frame sequence is adjusted so that the first maximum pixel range that is used for motion search control is esa, and the first sub-pixel estimation complexity is level 9. This meets the requirement of increasing the computational complexity for video encoding of the i^{th} video frame sequence. The first maximum pixel range (esa) is larger than the second maximum pixel range (umh), and the first sub-pixel estimation complexity (level 9) is higher than the second sub-pixel estimation complexity (level 8). At the same time, the first motion compensation parameter for video encoding of the i^{th} video frame sequence is increased, so that the first search range in the first motion compensation parameter is larger than the second search range in the second motion compensation parameter for video encoding of the (i-1)^{th} video frame sequence.

The second motion estimation parameter for video encoding of the (i-1)^{th} video frame sequence includes that the second maximum pixel range that is used for motion search control is umh, and the second sub-pixel estimation complexity is level 8. In this case, the first computational complexity for video encoding of the (i-1)^{th} video frame sequence is less than the second computational complexity threshold, and in order to improve the frame output stability, the computational complexity for video encoding of the i^{th} video frame sequence can be increased. In order to increase the computational complexity for video encoding of the i^{th} video frame sequence, the first motion estimation parameter for video encoding of the i^{th} video frame sequence is adjusted so that the first maximum pixel range that is used for motion search control is esa, and the first sub-pixel estimation complexity is level 9. This meets the requirement of increasing the computational complexity for video encoding of the i^{th} video frame sequence. The first maximum pixel range (esa) is larger than the second maximum pixel range (umh), and the first sub-pixel estimation complexity (level 9) is higher than the second sub-pixel estimation complexity (level 8). At the same time, the first motion compensation parameter for video encoding of the i^{th} video frame sequence is increased, so that the first search range in the first motion compensation parameter is larger than the second search range in the second motion compensation parameter for video encoding of the (i-1)^{th} video frame sequence.

In the method provided by this embodiment of this application, when encoding a current video frame sequence, a motion estimation parameter and a motion compensation parameter of the current video frame sequence are adaptively adjusted according to at least one of server computational complexity consumed to encode a previous video frame sequence, a first image attribute of a first video frame image in the current video frame sequence, and a second image attribute of a second video frame image in the previous video frame sequence, so that the adjusted motion estimation parameter and motion compensation parameter can meet the encoding requirement of the current video frame sequence, to improve frame output stability and reduce server deployment costs.

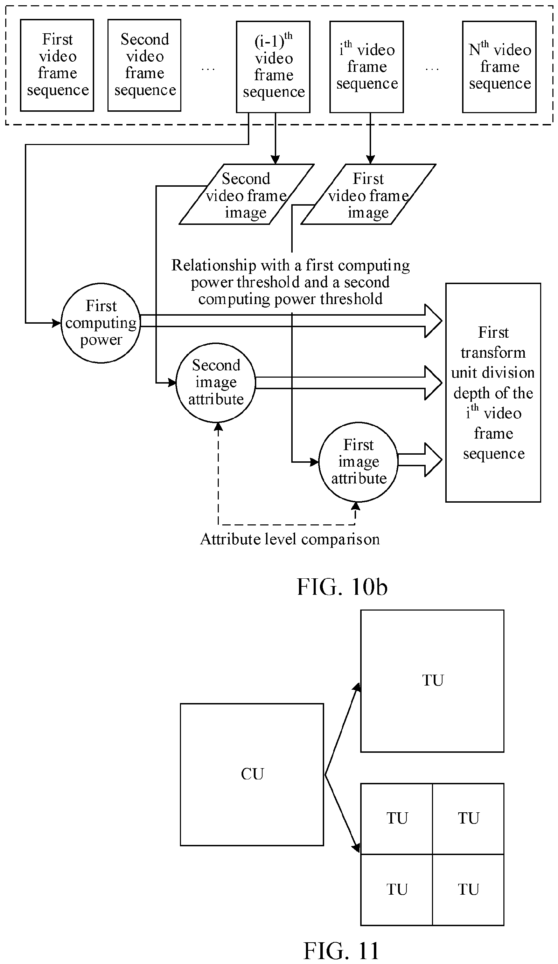

In an optional embodiment of the video processing method provided by the embodiment corresponding to FIG. 2 of this application, referring to FIG. 10a and FIG. 10b, the encoding parameter includes a transform unit division depth. FIG. 10a is a schematic flowchart of determining a transform unit division depth. FIG. 10b is a schematic architectural diagram of determining a transform unit division depth. Operation S150 includes sub-operation S1541 to sub-operation S1544. Details are as follows:
S1541: Obtain a second transform unit division depth of the (i-1)^{th} video frame sequence.
S1542: In a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, adjust, according to the second transform unit division depth, the first transform unit division depth of the i^{th} video frame sequence to be lower than the second transform unit division depth.
S1543: In a case that the first computational complexity is greater than the second computational complexity threshold and less than the first computational complexity threshold, and the attribute level of the first image attribute is equal to that of the second image attribute, maintain the first transform unit division depth of the i^{th} video frame sequence to be the same as the second transform unit division depth of the (i-1)^{th} video frame sequence.
S1544: In a case that the first computational complexity is less than the second computational complexity threshold, or in a case that the first computational complexity is greater than the second computational complexity threshold and less than the first computational complexity threshold, and the attribute level of the first image attribute is lower than that of the second image attribute, adjust, according to the second transform unit division depth, the first transform unit division depth of the i^{th} video frame sequence to be higher than the second transform unit division depth.

FIG. 11 is a schematic diagram of transform unit depth division according to an embodiment of this application. When encoding the video frame images in the video frame sequence, the video frame images are sent to an encoder and first divided into encoding tree units (CTU) according to the 64×64 block size, and then depth division is performed on each CTU to obtain a coding unit (CU). Each coding unit (CU) includes a prediction unit (PU) and a transform unit (TU). That is, the transform unit is a finer-grained unit obtained by performing depth division on the coding unit.

The depth division of each CU adopts a top-down division rule. When the depth is 0, that is, depth=0, a size of a transform unit (TU) in each CU is maintained to be equal to that of the CU. For example, if the size of the CU block is 64×64, the size of the TU is also 64×64. If the size of the CU block is 32×32, the size of the TU is also 32×32. If the size of the CU block is 16×16, the size of the TU is also 16×16. If the size of the CU block is 8×8, the size of the TU is also 8×8. When the depth is 1, that is, depth=1, the CU block is divided into 4 TU blocks, for example, if the size of the CU block is 64×64, the size of the TU is 32×32, if the size of the CU block is 32×32, the size of the TU is 16×16, if the size of the CU block is 16×16, the size of the TU is 8×8, and if the size of the CU block is 8×8, the size of the TU is 4×4. When the transform unit division depth is greater, the computational complexity required to encode images is greater. When the computational complexity needs to be reduced, the transform unit division depth can be reduced.

The schematic diagram of transform unit depth division shown in FIG. 11 is only an example, that is, specific values shown in FIG. 11 are only examples. This embodiment of this application does not specifically limit the division manner of the transform unit and the prediction unit.

When one of a condition 1 or a condition 2 is met, the computational complexity for video encoding of the i^{th} video frame sequence needs to be reduced. Condition 1: The first computational complexity is greater than the first computational complexity threshold. Condition 2: The first computational complexity is greater than the second computational complexity threshold and less than the first computational complexity threshold, and the attribute level of the first image attribute is greater than that of the second image attribute. By reducing the transform unit division depth, the computational complexity for video encoding of the i^{th} video frame sequence is reduced.

The explanation of the first computational complexity threshold and the second computational complexity threshold has been introduced above. For details, refer to the relevant introduction above. Similarly, the explanation of attribute levels has been introduced above. For details, refer to the relevant introduction above.

For example, when encoding the (i-1)^{th} video frame sequence, the transform unit division depth is depth=1, that is, each CU is divided into 4 TU blocks. In this case, the first computational complexity consumed to perform video encoding on the (i-1)^{th} video frame sequence exceeds the first computational complexity threshold, and the computational complexity for video encoding of the i^{th} video frame sequence needs to be reduced. In order to reduce the computational complexity for video encoding of the i^{th} video frame sequence, the transform unit division depth for video encoding of the i^{th} video frame sequence is adjusted to depth=0, that is, each CU is divided into 1 TU block. This meets the requirement of reducing the computational complexity for video encoding of the i^{th} video frame sequence. The transform unit division depth for video encoding of the i^{th} video frame sequence (a first transform unit division depth depth=0) is lower than that for video encoding of the (i-1)^{th} video frame sequence (a second transform unit division depth depth=1).

The transform unit division depth for video encoding of the (i-1)^{th} video frame sequence is depth=1, that is, each CU is divided into 4 TU blocks. In this case, the first computational complexity consumed to perform video encoding on the (i-1)^{th} video frame sequence is greater than the second computational complexity threshold and less than the first computational complexity threshold, the attribute level of the second video frame image in the (i-1)^{th} video frame sequence is lower than that of the first video frame image in the i^{th} video frame sequence (the texture complexity information and scene complexity information of the first video frame image increase relative to the texture complexity information and scene complexity information of the second video frame image), and the computational complexity consumed to perform video encoding on the i^{th} video frame sequence needs to be reduced. In order to reduce the computational complexity for video encoding of the i^{th} video frame sequence, the transform unit division depth for video encoding of the i^{th} video frame sequence is adjusted to depth=0, that is, each CU is divided into 1 TU block. This meets the requirement of reducing the computational complexity for video encoding of the i^{th} video frame sequence. The transform unit division depth for video encoding of the i^{th} video frame sequence (a first transform unit division depth depth=0) is lower than that for video encoding of the (i-1)^{th} video frame sequence (a second transform unit division depth depth=1).

When a condition 3 is met, there is no need to adjust the computational complexity for video encoding of the i^{th} video frame sequence. Condition 3: The first computational complexity is greater than the second computational complexity threshold and less than the first computational complexity threshold, and the attribute level of the first image attribute is equal to that of the second image attribute. Since there is no need to adjust the computational complexity for video encoding of the i^{th} video frame sequence, the first transform unit division depth of the i^{th} video frame sequence can be maintained to be the same as the second transform unit division depth of (i-1)^{th} video frame sequence.

For example, the transform unit division depth for video encoding of the (i-1)^{th} video frame sequence is depth=1, that is, each CU is divided into 4 TU blocks. In this case, the first computational complexity consumed to perform video encoding on the (i-1)^{th} video frame sequence is greater than the second computational complexity threshold and less than the first computational complexity threshold, the attribute level of the second video frame image in the (i-1)^{th} video frame sequence is equal to that of the first video frame image in the i^{th} video frame sequence (the texture complexity information and scene complexity information of the first video frame image do not change relative to the texture complexity information and scene complexity information of the second video frame image), and the computational complexity consumed to perform video encoding on the i^{th} video frame sequence does not need to be reduced. The first transform unit division depth of the i^{th} video frame sequence can be maintained to be the same as the second transform unit division depth of (i-1)^{th} video frame sequence. That is, the transform unit division depth for video encoding of the i^{th} video frame sequence is depth=1, that is, each CU is divided into 4 TU blocks.

When one of a condition 4 or a condition 5 is met, in order to improve the frame output stability, the computational complexity for video encoding of the i^{th} video frame sequence can be increased. Condition 4: The first computational complexity is less than the second computational complexity threshold. Condition 5: The first computational complexity is greater than the second computational complexity threshold and less than the first computational complexity threshold, and the attribute level of the first image attribute is lower than that of the second image attribute. By increasing the transform unit division depth, the computational complexity for video encoding of the i^{th} video frame sequence is increased.

For example, when encoding the (i-1)^{th} video frame sequence, the transform unit division depth is depth=0, that is, each CU is divided into 1 TU block. In this case, the first computational complexity consumed to perform video encoding on the (i-1)^{th} video frame sequence is less than the second computational complexity threshold, and in order to improve the frame output stability, the computational complexity for video encoding of the i^{th} video frame sequence can be increased. In order to increase the computational complexity for video encoding of the i^{th} video frame sequence, the transform unit division depth for video encoding of the i^{th} video frame sequence is adjusted to depth=1, that is, each CU is divided into 4 TU blocks. This meets the requirement of increasing the computational complexity for video encoding of the i^{th} video frame sequence. The transform unit division depth for video encoding of the i^{th} video frame sequence (a first transform unit division depth depth=1) is higher than that for video encoding of the (i-1)^{th} video frame sequence (a second transform unit division depth depth=0).

The transform unit division depth for video encoding of the (i-1)^{th} video frame sequence is depth=0, that is, each CU is divided into 1 TU blocks. In this case, the first computational complexity consumed to perform video encoding on the (i-1)^{th} video frame sequence is greater than the second computational complexity threshold and less than the first computational complexity threshold. The attribute level of the second video frame image in the (i-1)^{th} video frame sequence is higher than that of the first video frame image in the i^{th} video frame sequence (the texture complexity information and scene complexity information of the first video frame image are reduced relative to the texture complexity information and scene complexity information of the second video frame image). In order to improve the frame output stability, the computational complexity for video encoding of the i^{th} video frame sequence can be increased, that is, the transform unit division depth for video encoding of the i^{th} video frame sequence is adjusted to depth=1, that is, each CU is divided into 4 TU blocks. This meets the requirement of increasing the computational complexity for video encoding of the i^{th} video frame sequence. The transform unit division depth for video encoding of the i^{th} video frame sequence (a first transform unit division depth depth=1) is higher than that for video encoding of the (i-1)^{th} video frame sequence (a second transform unit division depth depth=0).

In the method provided by this embodiment of this application, when encoding a current video frame sequence, a transform unit division depth of the current video frame sequence is adaptively adjusted according to at least one of server computational complexity consumed to encode a previous video frame sequence, a first image attribute of a first video frame image in the current video frame sequence, and a second image attribute of a second video frame image in the previous video frame sequence, so that the adjusted transform unit division depth can meet the encoding requirement of the current video frame sequence, to improve frame output stability and reduce server deployment costs.

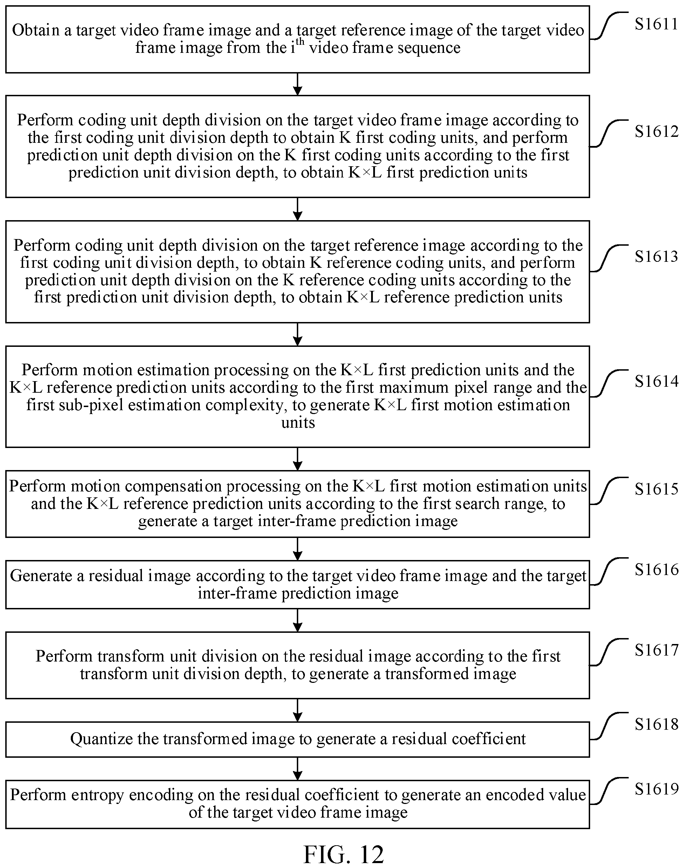

In an optional embodiment of the video processing apparatus provided by the embodiment corresponding to FIG. 2 of this application, referring to FIG. 12, the video encoding parameter of the i^{th} video frame sequence includes the first coding unit division depth, the first prediction unit division depth, the first transform unit division depth, the first maximum pixel range, the first sub-pixel estimation complexity, and the first search range. Operation S160 includes sub-operation S1611 to sub-operation S1619. Details are as follows:
S1611: Obtain a target video frame image and a target reference image of the target video frame image from the i^{th} video frame sequence, where
   The target reference image is obtained after encoding a video frame image preceding the target video frame image.
S1612: Perform coding unit depth division on the target video frame image according to the first coding unit division depth, to obtain K first coding units; and perform prediction unit depth division on the K first coding units according to the first prediction unit division depth, to obtain K×L first prediction units.

Both K and L are integers greater than or equal to 1.

S1613: Perform coding unit depth division on the target reference image according to the first coding unit division depth, to obtain K reference coding units; and perform prediction unit depth division on the K reference coding units according to the first prediction unit division depth, to obtain K×L reference prediction units.

The K first coding units correspond to the K reference coding units, and the K×L first prediction units correspond to the K×L reference prediction units.

S1614: Perform motion estimation processing on the K×L first prediction units and the K×L reference prediction units according to the first maximum pixel range and the first sub-pixel estimation complexity, to generate K×L first motion estimation units.

S1615: Perform motion compensation processing on the K×L first motion estimation units and the K×L reference prediction units according to the first search range, to generate a target inter-frame prediction image;

The target inter-frame prediction image includes K×L target inter-frame prediction units.

S1616: Generate a residual image according to the target video frame image and the target inter-frame prediction image.

S1617: Perform transform unit division on the residual image according to the first transform unit division depth, to generate a transformed image.

S1618: Quantize the transformed image to generate a residual coefficient.

S1619: Perform entropy encoding on the residual coefficient to generate an encoded value of the target video frame image.

Video encoding of the i^{th} video frame sequence requires encoding of all video frame images in the i^{th} video frame sequence. In this embodiment of this application, the encoding of any video frame image in the i^{th} video frame sequence is used as an example for description.

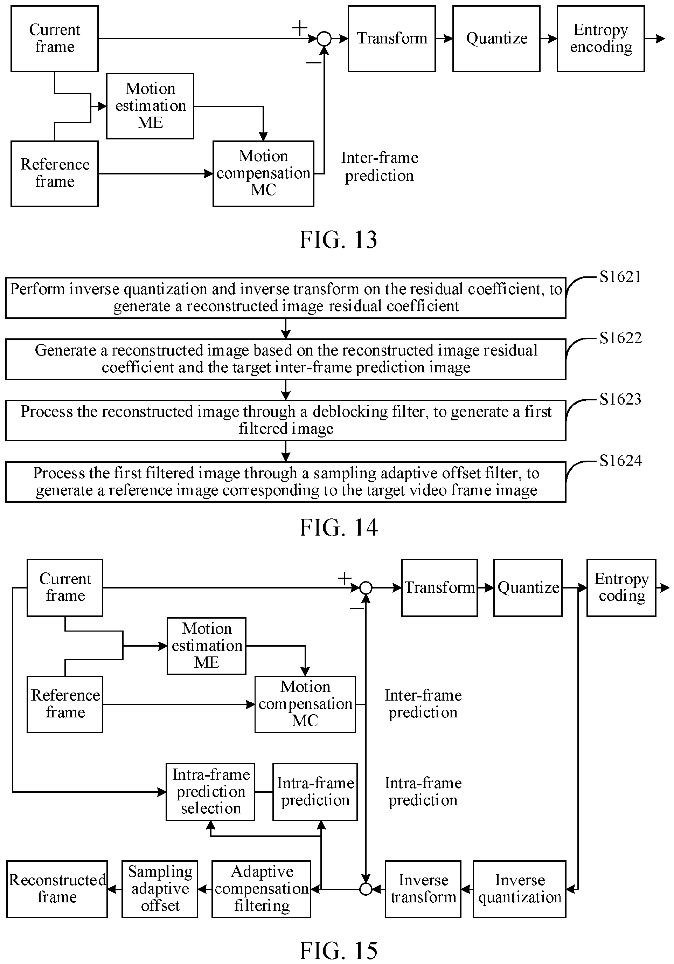

FIG. 13 is a schematic diagram of encoding a target video frame image according to an embodiment of this application. Any video frame image is obtained as the target video frame image from the i^{th} video frame sequence, and an image obtained after encoding a previous video frame image of the target video frame image is used as a target reference image of the target video frame image. The target video frame image is sent to an encoder, and coding unit depth division is performed on the target video frame image according to the first coding unit division depth to obtain K first coding units. Prediction unit depth division is performed on the K first coding units according to the first prediction unit division depth, to obtain K×L first prediction units. Similarly, the target reference image is sent to the encoder, and coding unit depth division is performed on the target reference image according to the first coding unit division depth, to obtain K reference coding units. Prediction unit depth division is performed on the K reference coding units according to the first prediction unit division depth, to obtain K×L reference prediction units. The reference coding unit corresponds to the first coding unit, and the reference prediction unit corresponds to the first prediction unit.

Motion estimation processing (inter-frame prediction) is performed on the K×L first prediction units and the K×L reference prediction units according to the first maximum pixel range and the first sub-pixel estimation complexity, to generate a first motion estimation image formed by K×L first motion estimation units. Subtraction is performed on the first motion estimation image (including the K×L first motion estimation units) and the target video frame image (including the K×L first prediction units) to obtain the residual image. Transform unit division is performed on the residual image according to the first transform unit division depth, to generate a transformed image. The transformed image is quantized to generate a residual coefficient. The residual coefficient is input to an entropy encoding module for entropy encoding, to generate an encoded value of the target video frame image. The encoded value is used to represent the encoded target video frame image.

In the method provided in this embodiment of this application, each video frame image in the i^{th} video frame sequence is encoded based on the adjusted video encoding parameter (including the first coding unit division depth, the first prediction unit division depth, the first transform unit division depth, the first maximum pixel range, the first sub-pixel estimation complexity, and the first search range), to obtain the encoded value corresponding to each video frame image, thereby implementing the video encoding process of the i^{th} video frame sequence. Based on this, video encoding is performed on each video frame sequence in the target video to obtain the corresponding encoded video of the target video. When transmitting the encoded video, storage space can be reduced and transmission efficiency can be improved. When decoding the encoded video, frame output stability can be improved.

In an optional embodiment of the video processing method provided by the embodiment corresponding to FIG. 10 of this application, referring to FIG. 14, after sub-operation S1618, sub-operation S1621 to sub-operation S1624 are further included. Details are as follows:
S1621: Perform inverse quantization and inverse transform on the residual coefficient, to generate a reconstructed image residual coefficient.
S1622: Generate a reconstructed image based on the reconstructed image residual coefficient and the target inter-frame prediction image.
S1623: Process the reconstructed image through a deblocking filter, to generate a first filtered image.
   The deblocking filter is configured to perform horizontal filtering on vertical edge of the reconstructed image and perform vertical filtering on horizontal edge of the reconstructed image.
S1624: Process the first filtered image through a sampling adaptive offset filter, to generate a reference image corresponding to the target video frame image.

The reference image is used to encode a next frame image of the target video frame image, and the sampling adaptive offset filter is configured to perform band offset and edge offset on the first filtered image.

The reference image for encoding the target video frame image is an image obtained after encoding the previous video frame image of the target video frame image, and the reference image for encoding the next video frame image of the target video frame image is an image obtained after encoding the target video frame image. FIG. 15 is a schematic diagram of an encoding framework according to an embodiment of this application. Inverse quantization and inverse transform are performed on the residual coefficient, to generate a reconstructed image residual coefficient. A reconstructed image is obtained by adding the reconstructed image residual coefficient and the target inter-frame prediction image. After the reconstructed image passes through a deblocking filter and a sampling adaptive offset filter (in-loop filtering) in sequence, a reference image corresponding to the target video frame image is generated. The reference image corresponding to the target video frame image enters a reference frame queue as a reference image of a next frame, thereby performing subsequent encoding in sequence.

When encoding the target video frame image, a process of intra-frame prediction of the target video frame image is also included. Intra-frame prediction selection is performed based on the target video frame image and the reconstructed image, to generate an intra-frame prediction selection image. Intra-frame prediction is performed according to the intra-frame prediction selection image and the reconstructed image, to obtain an intra-frame prediction image.

In the method provided by this embodiment of this application, the reference image generated based on the target video frame image is used as the reference image in the encoding process of the next frame, which improves the video encoding process of the i^{th} video frame sequence and improves frame output stability.

In an optional embodiment of the video processing method provided by the embodiment corresponding to FIG. 2 of this application, the video encoding parameter includes a processing cancellation message. Operation S150 further includes sub-operation S1551. Details are as follows:
S1551: In a case that the first computational complexity is greater than the first computational complexity threshold, or in a case that the first computational complexity is greater than the second computational complexity threshold and less than the first computational complexity threshold, and the attribute level of the first image attribute is higher than that of the second image attribute, cancel one or more of denoising processing, sharpening processing, and time domain filtering processing of the i^{th} video frame sequence according to the processing cancellation message.

Video encoding also includes other encoding processes, including pre-processing and post-processing. Pre-processing includes denoising processing, sharpening processing, and time domain filtering processing, and post-processing includes loop filtering, AV1 film grain, and the like. Loop filtering includes adaptive compensation filtering, adaptive loop filtering (ALF), sampling adaptive offset (SAO), and the like. These processes consume an amount of server computational complexity.

When one of a condition 1 or a condition 2 is met, the computational complexity for video encoding of the i^{th} video frame sequence needs to be reduced. Condition 1: The first computational complexity is greater than the first computational complexity threshold. Condition 2: The first computational complexity is greater than the second computational complexity threshold and less than the first computational complexity threshold, and the attribute level of the first image attribute is greater than that of the second image attribute. By reducing the pre-processing process and/or post-processing process, the computational complexity for video encoding of the i^{th} video frame sequence is reduced. Specifically, this can be achieved by canceling one or more of denoising processing, sharpening processing, and time domain filtering processing.

In the method provided by this embodiment of this application, when encoding a current video frame sequence, a processing process of the current video frame sequence is adaptively adjusted according to at least one of server computational complexity consumed to encode a previous video frame sequence, a first image attribute of a first video frame image in the current video frame sequence, and a second image attribute of a second video frame image in the previous video frame sequence, so that the adjusted coding unit division depth can meet the encoding requirement of the current video frame sequence, to improve frame output stability and reduce server deployment costs.

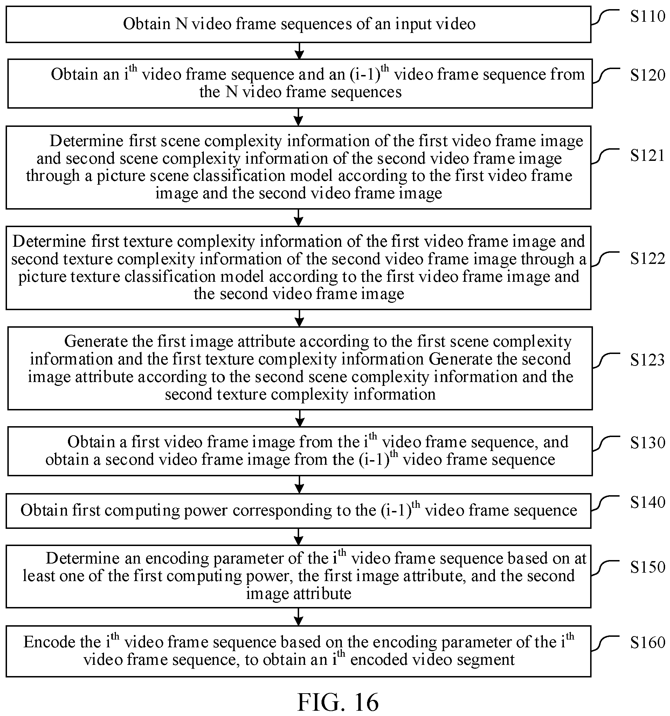

In an optional embodiment of the video processing method provided by the embodiment corresponding to FIG. 2 of this application, referring to FIG. 16, after operation S120, operation S121 to operation S123 are included. Details are as follows:
S121: Determine first scene complexity information of the first video frame image and second scene complexity information of the second video frame image through a picture scene classification model according to the first video frame image and the second video frame image.

Specifically, the first video frame image and the second video frame image can be input into a picture scene classification model respectively. The picture scene classification model performs analysis processing on the inputted first video frame image and second video frame image to output first scene complexity information of the first video frame image and second scene complexity information of the second video frame image.

The picture scene classification model is a feature extraction classification model based on deep learning and neural networks, and identifies and classifies picture scenes into simple scenes, general scenes, intermediate scenes, and complex scenes. Algorithms in the model include CNN, decision tree, random forest, and the like.

Taking deep learning as an example, algorithm frameworks such as deep learning CNN or CNN+RNN are used to identify video frame images. Video frame images are used as training samples in deep learning related models. When the training samples are sufficient, the scene recognition accuracy of scenes with clear picture characteristics (for example, game scenes, football scenes, basketball scenes, or animation scenes) can reach 99% or above through a pure CNN network (processing such as convolution layer, filtering, or pooling layer) model. The scene recognition accuracy of scenes with scattered picture characteristics (for example, TV series scenes, outdoor sports scenes, food scenes, or travel scenes) can reach around 90% through time domain + frequency domain analysis based on CNN combined with RNN+LSTM.

S 122: Determine first texture complexity information of the first video frame image and second texture complexity information of the second video frame image through a picture texture classification model according to the first video frame image and the second video frame image.

Specifically, the first video frame image and the second video frame image may be input into a picture texture classification model respectively. The picture texture classification model performs analysis processing on the inputted first video frame image and second video frame image to output first texture complexity information of the first video frame image and second texture complexity information of the second video frame image.

Texture complexity information includes simple textures, general textures, intermediate textures, and complex textures. Texture complexity information analysis methods include: algorithms such as Euclidean distance, statistical histogram, LBP detection algorithm, and CNN feature extraction classification, or image complexity estimation methods based on edge features, where commonly used algorithms include canny, sobel, robert and other edge detection operator algorithms. This application is not limited herein.

Take LBP detection algorithm as an example: LBP refers to local binary pattern and is an operator used to describe local features of an image. The LBP feature has significant advantages such as grayscale invariance and rotation invariance. An original LBP operator is defined to be within the 3×3 window, the center pixel of the window is used as a threshold, and grayscale values of adjacent 8 pixels are compared with the threshold. If a value of a surrounding pixel is greater than the value of the central pixel, the position of the pixel is marked as 1; otherwise, the position of the pixel is 0. In this way, 8 pixels in the 3×3 adjacent area can be compared to produce 8-bit binary numbers (usually converted to decimal numbers, that is, LBP codes, a total of 256 types), that is, the LBP value of the center pixel of the window is obtained, and this value is used to reflect the texture information of the area. During detection, the detection area can be automatically adjusted based on the video picture resolution and computational complexity, or the picture resolution is adjusted through downsampling. LBP values of the area for comprehensive picture detection are summarized and calculated. For example, when 80% of the LBP values are all below 50, this indicates simple textures, 50 to 100 indicates general textures, 100 to 150 indicates intermediate textures, and more than 150 indicates complex textures.

S123: Generate the first image attribute according to the first scene complexity information and the first texture complexity information, and generate the second image attribute according to the second scene complexity information and the second texture complexity information.

Scene complexity information and texture complexity information are used as image attributes, and the image attribute represents a complexity of a video frame image to match an encoding parameter.

In the method provided by this embodiment of this application, the scene complexity information of the video frame image is determined through the picture scene classification model, the texture complexity information of the video frame image is determined through the picture texture classification model, and then, an image attribute is determined according to the determined scene complexity information and texture complexity information, thereby ensuring the accuracy and reliability of the determined image attribute, to facilitate subsequent accurate adjustment of a video encoding parameter based on the image attribute.

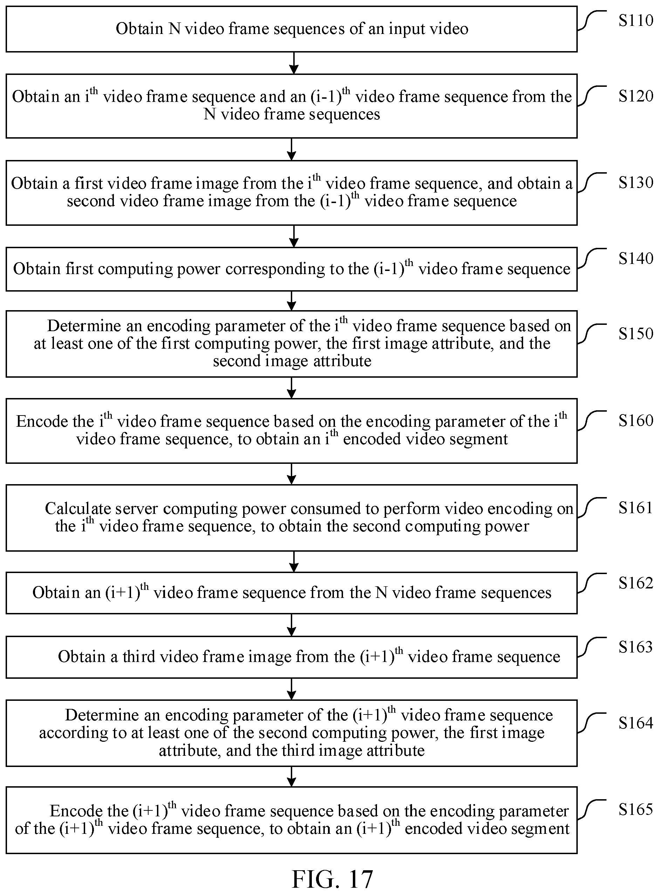

In an optional embodiment of the video processing method provided by the embodiment corresponding to FIG. 2 of this application, referring to FIG. 17, after operation S160, operation S161 to operation S165 are included. Details are as follows:
S161: Calculate computational complexity consumed to encode the i^{th} video frame sequence, to obtain the second computational complexity.
S 162: Obtain an (i+1)^{th} video frame sequence from the N video frame sequences.
   The i^{th} video frame sequence and the (i+1)^{th} video frame sequence are adjacent in the target video.
S163: Obtain a third video frame image from the (i+1)^{th} video frame sequence,

The third video frame image corresponds to a third image attribute.

S164: Determine an encoding parameter of the (i+1)^{th} video frame sequence according to at least one of the second computational complexity, the first image attribute, and the third image attribute.

S165: Encode the (i+1)^{th} video frame sequence based on the video encoding parameter of the (i+1)^{th} video frame sequence, to obtain an (i+1)^{th} encoded video segment.

The above operation S161 to operation S165 are the process of encoding the (i+1)^{th} video frame sequence. After completing the encoding of the i^{th} video frame sequence, the computational complexity consumed to encode the i^{th} video frame sequence is calculated. A third video frame image in the (i+1)^{th} video frame sequence is obtained. The third video frame image may be an IDR frame in (i+1)^{th} video frame sequence, the third video frame image corresponds to a third image attribute, and the third image attribute is used to represent texture complexity information and scene complexity information of the third video frame image. The video encoding parameter of the (i+1)^{th} video frame sequence is adjusted and determined based on the second computational complexity consumed to encode the i^{th} video frame sequence, the first image attribute and the third image attribute according to the video encoding parameter of the i^{th} video frame sequence. Encoding the (i+1)^{th} video frame sequence according to the video encoding parameter of the (i+1)^{th} video frame sequence specifically means encoding all video frame images in the (i+1)^{th} video frame sequence according to the video encoding parameter of the (i+1)^{th} video frame sequence, to obtain an encoded image of each video frame image. All encoded images form the (i+1)^{th} encoded video segment.

In the video processing method provided by this embodiment of this application, video encoding is performed on the input video, if the scene in the input video is unique and fixed, the video encoding parameter is matched according to the scene, and the input video is encoded based on the matched video encoding parameter. In this way, the encoding parameter can meet the encoding requirement of the current video frame sequence, to improve frame output stability and reduce server deployment costs. If the input video includes multiple scenes, the input video is segmented according to scene changes, to obtain N video frame sequences, and an encoding task of the input video is divided into encoding of the N video frame sequences that form the input video; and when encoding a current video frame sequence, a video encoding parameter of the current video frame sequence is adaptively adjusted according to at least one of server computational complexity consumed to encode a previous video frame sequence, a first image attribute of a first video frame image in the current video frame sequence, and a second image attribute of a second video frame image in the previous video frame sequence, so that the adjusted encoding parameter can meet the encoding requirement of the current video frame sequence, to improve frame output stability and reduce server deployment costs.

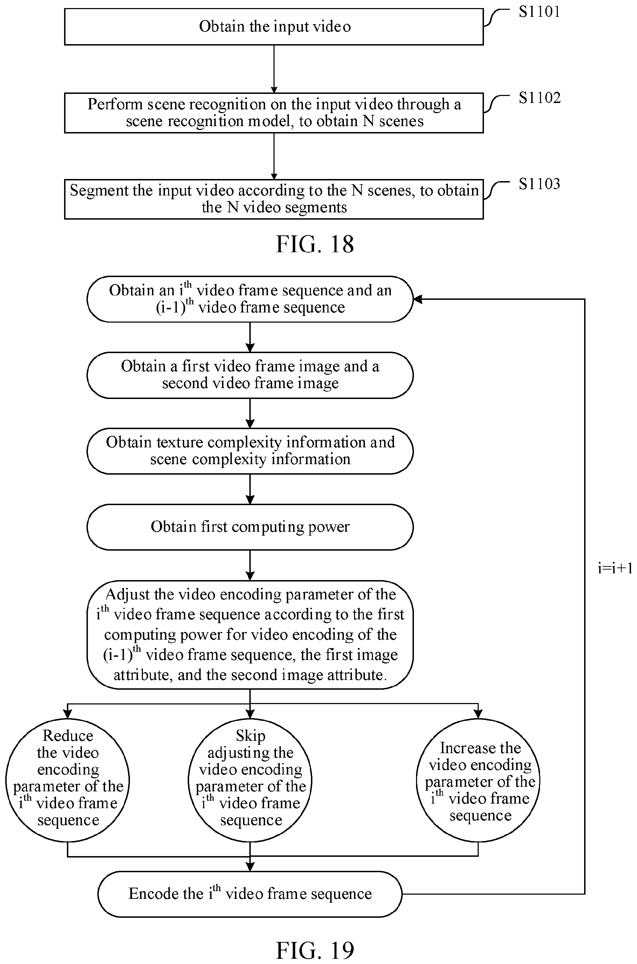

In an optional embodiment of the video processing method provided by the embodiment corresponding to FIG. 2 of this application, referring to FIG. 18, operation S110 includes sub-operation S1101 to sub-operation S1103. Details are as follows:
S1101: Obtain an input video.
S1102: Perform scene recognition on the input video through a scene recognition model, to obtain N scenes.
   The scene recognition model is used to identify scenes appearing in the input video.
S1103: Segment the input video according to the N scenes, to obtain the N video segments.

N scenes in the input video are identified through a trained scene recognition model, the input video is segmented by using scene switching as a video segmentation point, to obtain N sub-video segments, and the sub-video segments are represented in the form of video frame sequences. Each video frame sequence includes all frame images in the sub-video segment. The scene recognition model may be a feature extraction classification model based on deep learning and neural networks. Commonly used algorithms include CNNs, decision trees, random forests, or the like. Taking deep learning as an example, algorithm frameworks such as deep learning CNN or CNN+RNN are used to generate images from video frames, and the images generated from video frames are used as training samples of deep learning related models.

For example, the input video includes three scenes: meeting scene, theater scene, and swimming scene. The scene complexity of the meeting scene is simple, the scene complexity of the theater scene is intermediate, and the scene complexity of the swimming scene is complex. A manner of segmenting the input video through the scene recognition model is: the input video is used as the input of the trained scene recognition model, and the scene recognition model recognizes that the input video includes three scenes, outputs three sub-video segments corresponding to the three scenes, and represents each sub-video segment in the form of video frame sequence.

In the video processing method provided by this embodiment of this application, the scenes included in the input video are identified through the scene recognition model, and the input video is segmented according to the scenes included in the input video, to obtain N video frame sequences, thus ensuring the segmentation rationality of the video frame sequences. The video frame images included in each video frame sequence correspond to the same scene. Accordingly, the computational complexity consumed to encode each video frame sequence does not fluctuate greatly, that is, it is ensured that the corresponding video encoding parameter of each video frame sequence can be better suited for encoding each video frame image in the video frame sequence.

In order to facilitate understanding, a video processing method will be introduced below with reference to FIG. 19. FIG. 19 is a schematic flowchart of a video processing method according to an embodiment of this application.

First, when encoding the input video, the input video is segmented according to the scene change in the input video to obtain N video frame sequences (GOP), and GOP is used as the smallest granularity to adjust the encoding parameter of each GOP.

Secondly, the i^{th} video frame sequence and the (i-1)^{th} video frame sequence are obtained from the N video frame sequences. The i^{th} video frame sequence and the (i-1)^{th} video frame sequence are adjacent in the target video.

Then, a first video frame image is obtained from the i^{th} video frame sequence, and a second video frame image is obtained from the (i-1)^{th} video frame sequence. The first video frame image corresponds to the first image attribute, the second video frame image corresponds to the second image attribute, and the image attribute is used to represent texture complexity information and scene complexity information of the video frame image. The first video frame image may be an IDR frame in the i^{th} video frame sequence and the second video frame image may be an IDR frame in the (i-1)^{th} video frame sequence. Each video frame image corresponds to an image attribute, and the image attribute is used to represent the texture complexity information and the scene complexity information of the video frame image.

Next, first computational complexity corresponding to the (i-1)^{th} video frame sequence is obtained. The first computational complexity is used to represent server computational complexity consumed to encode the (i-1)^{th} video frame sequence.

Then, the video encoding parameter of the i^{th} video frame sequence is adjusted based on the video encoding parameter of the (i-1)^{th} video frame sequence according to the first computational complexity corresponding to the (i-1)^{th} video frame sequence, the first image attribute, and the second image attribute.

If the first computational complexity is greater than the first computational complexity threshold, the video encoding parameter of the i^{th} video frame sequence is reduced. The first computational complexity threshold refers to a computational complexity threshold provided by the server for video encoding. For example, the first computational complexity threshold provided by the server for video encoding may be 1000, and the first computational complexity corresponding to the (i-1)^{th} video frame sequence exceeds 1000. In this case, the computational complexity needs to be reduced when encoding the i^{th} video frame sequence. In order to reduce the computational complexity consumed to encode the i^{th} video frame sequence, the video encoding parameter of the i^{th} video frame sequence needs to be reduced.

If the first computational complexity is greater than the second computational complexity threshold and less than the first computational complexity threshold, and the attribute level of the first image attribute is higher than that of the second image attribute, the video encoding parameter of the i^{th} video frame sequence is reduced, where the first computational complexity threshold is greater than the second computational complexity threshold. For example, the first computational complexity threshold provided by the server for video encoding is 1000, the second computational complexity threshold is 800, and the first computational complexity for encoding the (i-1)^{th} video frame sequence is 900. The first computational complexity is greater than the second computational complexity threshold and less than the first computational complexity threshold. When the attribute level is higher (higher texture complexity and/or higher scene complexity), the computational complexity required is higher. The attribute level of the first image attribute is greater than that of the second image attribute, which means that the computational complexity required to encode the i^{th} video frame sequence is greater than that required to encode the (i-1)^{th} video frame sequence. In this way, the computational complexity required to encode the i^{th} video frame sequence needs to be reduced. In order to reduce the computational complexity required to encode the i^{th} video frame sequence, the video encoding parameter of the i^{th} video frame sequence needs to be reduced.

If the first computational complexity is greater than the second computational complexity threshold and less than the first computational complexity threshold, and the attribute level of the first image attribute is equal to that of the second image attribute, the video encoding parameter of the i^{th} video frame sequence is maintained to be the same as that of the (i-1)^{th} video frame sequence. For example, the first computational complexity threshold provided by the server for video encoding is 1000, the second computational complexity threshold is 800, and the first computational complexity for encoding the (i-1)^{th} video frame sequence is 900. The first computational complexity is greater than the second computational complexity threshold and less than the first computational complexity threshold. The attribute level of the first image attribute is equal to that of the second image attribute, which means that the computational complexity required to encode the i^{th} video frame sequence is equal to or close to that required to encode the (i-1)^{th} video frame sequence. In this way, the video encoding parameter of the i^{th} video frame sequence does not need to be adjusted.

If the first computational complexity is greater than the second computational complexity threshold and less than the first computational complexity threshold, and the attribute level of the first image attribute is lower than that of the second image attribute, the video encoding parameter of the i^{th} video frame sequence is increased. For example, the first computational complexity threshold provided by the server for video encoding is 1000, the second computational complexity threshold is 800, and the first computational complexity for encoding the (i-1)^{th} video frame sequence is 900. The first computational complexity is greater than the second computational complexity threshold and less than the first computational complexity threshold. When the attribute level is higher (higher texture complexity and/or higher scene complexity), the computational complexity required is higher. The attribute level of the first image attribute is lower than that of the second image attribute, which means that the computational complexity required to encode the i^{th} video frame sequence is smaller than that required to encode the (i-1)^{th} video frame sequence. To improve encoding quality, the video encoding parameter of the i^{th} video frame sequence can be increased.

If the first computational complexity is smaller than the second computational complexity threshold, the video encoding parameter of the i^{th} video frame sequence is increased. For example, the second computational complexity threshold provided by the server for video encoding may be 800, the first computational complexity for encoding the (i-1)^{th} video frame sequence is 700, and the first computational complexity is less than the second computational complexity threshold. To improve encoding quality, the video encoding parameter of the i^{th} video frame sequence can be increased.

Finally, all the video frame images in the i^{th} video frame sequence are encoded according to the video encoding parameter of the i^{th} video frame sequence, to obtain an encoded image of each video frame image. All encoded images form the i^{th} encoded video segment.

A sequence of adjusting the video encoding parameter of the i^{th} video frame sequence is:
(1) Adjust the coding unit division depth.
   A second coding unit division depth of the (i-1)^{th} video frame sequence is obtained.
   In a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, the first coding unit division depth of the i^{th} video frame sequence is adjusted according to the second coding unit division depth. The first coding unit division depth is lower than the second coding unit division depth.
   In a case that the first computational complexity is greater than the second computational complexity threshold and less than the first computational complexity threshold, and the attribute level of the first image attribute is equal to that of the second image attribute, the first coding unit division depth of the i^{th} video frame sequence is maintained to be the same as the second coding unit division depth of the (i-1)^{th} video frame sequence.
   In a case that the first computational complexity is less than the second computational complexity threshold, or in a case that the first computational complexity is greater than the second computational complexity threshold and less than the first computational complexity threshold, and an attribute level of the first image attribute is lower than that of the second image attribute, the first coding unit division depth of the i^{th} video frame sequence is adjusted according to the second coding unit division depth. The first coding unit division depth is higher than the second coding unit division depth.
(2) Adjust the motion estimation parameter and the motion compensation parameter.
   A second motion estimation parameter and a second motion compensation parameter of the (i-1)^{th} video frame sequence are obtained.
   In a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, adjust the first motion estimation parameter of the i^{th} video frame sequence according to the second motion estimation parameter and adjust the first motion compensation parameter of the i^{th} video frame sequence according to the second motion compensation parameter; where the first motion estimation parameter is determined based on a first maximum pixel range that is used for motion search control and a first sub-pixel estimation complexity, the second motion estimation parameter is determined based on a second maximum pixel range that is used for motion search control and a second sub-pixel estimation complexity, the first maximum pixel range is smaller than the second maximum pixel range, and the first sub-pixel estimation complexity is smaller than the second sub-pixel estimation complexity; the first motion compensation parameter is determined based on a first search range, and the second motion compensation parameter is determined based on a second search range; and The first search range is smaller than the second search range.
   In a case that the first computational complexity is greater than the second computational complexity threshold and less than the first computational complexity threshold, and the attribute level of the first image attribute is equal to that of the second image attribute, the first motion estimation parameter of the i^{th} video frame sequence is maintained to be the same as the second motion estimation parameter of the (i-1)^{th} video frame sequence; and the first motion compensation parameter of the i^{th} video frame sequence is maintained to be the same as the second motion compensation parameter of the (i-1)^{th} video frame sequence; where the first maximum pixel range is equal to the second maximum pixel range, and the first sub-pixel estimation complexity is equal to the second sub-pixel estimation complexity; and the first search range is equal to the second search range.
   In a case that the first computational complexity is less than a second computational complexity threshold, or when the first computational complexity is greater than a second computational complexity threshold and less than the first computational complexity threshold, and an attribute level of the first image attribute is lower than that of the second image attribute, the first motion estimation parameter of the i^{th} video frame sequence is adjusted according to the second motion estimation parameter and the first motion compensation parameter of the i^{th} video frame sequence is adjusted according to the second motion compensation parameter; where the first maximum pixel range is greater than the second maximum pixel range, and the first sub-pixel estimation complexity is greater than the second sub-pixel estimation complexity; and the first search range is larger than the second search range.
(3) Adjust the transform unit division depth.
   A second transform unit division depth of the (i-1)^{th} video frame sequence is obtained.
   In a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, the first transform unit division depth of the i^{th} video frame sequence is adjusted according to the second transform unit division depth, where the first transform unit division depth is lower than the second transform unit division depth.
   In a case that the first computational complexity is greater than the second computational complexity threshold and less than the first computational complexity threshold, and the attribute level of the first image attribute is equal to that of the second image attribute, the first transform unit division depth of the i^{th} video frame sequence is maintained to be the same as the second transform unit division depth of the (i-1)^{th} video frame sequence.
   Alternatively, in a case that the first computational complexity is less than the second computational complexity threshold, or in a case that the first computational complexity is greater than the second computational complexity threshold and less than the first computational complexity threshold, and the attribute level of the first image attribute is lower than that of the second image attribute, the first transform unit division depth of the i^{th} video frame sequence is adjusted according to the second transform unit division depth, where the first transform unit division depth is higher than the second transform unit division depth.
(4) Adjust the prediction unit division depth.
   A second prediction unit division depth of the (i-1)^{th} video frame sequence is obtained.
   In a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, the first prediction unit division depth of the i^{th} video frame sequence is adjusted according to the second prediction unit division depth, where the first prediction unit division depth is lower than the second prediction unit division depth.
   In a case that the first computational complexity is greater than the second computational complexity threshold and less than the first computational complexity threshold, and the attribute level of the first image attribute is equal to that of the second image attribute, the first prediction unit division depth of the i^{th} video frame sequence is maintained to be the same as the second prediction unit division depth of the (i-1)^{th} video frame sequence.
   In a case that the first computational complexity is less than the second computational complexity threshold, or in a case that the first computational complexity is greater than the second computational complexity threshold and less than the first computational complexity threshold, and the attribute level of the first image attribute is lower than that of the second image attribute, the first prediction unit division depth of the i^{th} video frame sequence is adjusted according to the second prediction unit division depth, where the first prediction unit division depth is higher than the second prediction unit division depth.
(5) Adjust other processes in video encoding.

In a case that the first computational complexity is greater than the first computational complexity threshold, or in a case that the first computational complexity is greater than the second computational complexity threshold and less than the first computational complexity threshold, and the attribute level of the first image attribute is higher than that of the second image attribute, one or more of denoising processing, sharpening processing, and time domain filtering processing is canceled according to the second prediction unit division depth.

In the solution provided by this embodiment of this application, texture complexity of video picture scenes is automatically analyzed and picture scenes are classified during the video encoding pre-analysis process, detection is performed according to picture scene switching of video encoding, and evaluation is performed according to classification of the video picture textures and picture scenes. Processes that consume relatively large computational complexity, such as coding unit division, MC, ME, transformation, pre-processing, and lookahead are adaptively cut. In this solution, balanced video encoding computational complexity is maintained and encoding kernel computational complexity is consumed smoothly while only compromising a limited video picture bd-rate. In this solution, the server computational complexity is smoothly controlled while compromising a limited video bd-rate, which increases the computational complexity load of the server machine by 5 to 10 points, greatly reduces costs of video cloud media processing and transcoding, and helps video cloud users reduce costs and increase efficiency in media processing and transcoding.

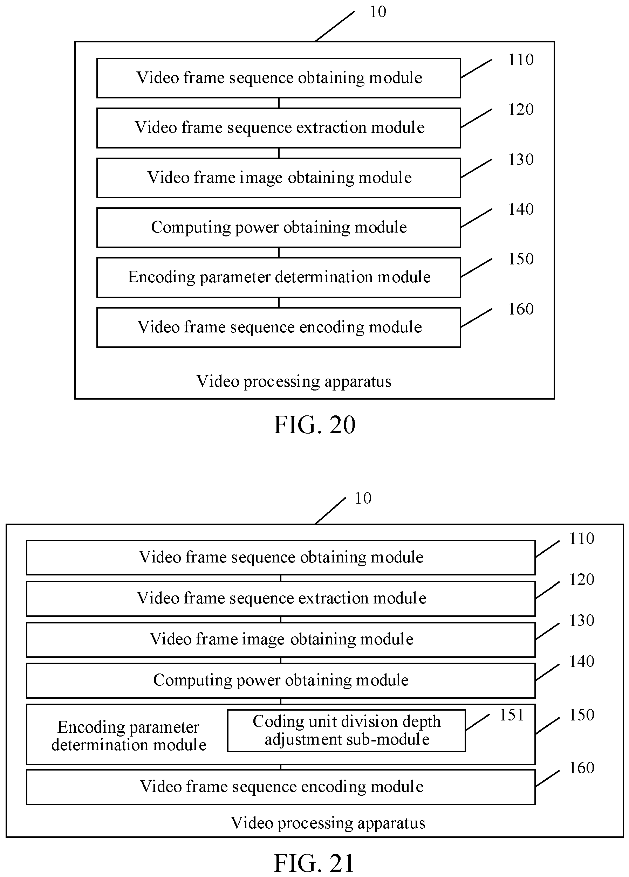

The video processing apparatus in the present disclosure is described in detail below. FIG. 20 is a schematic diagram of an embodiment of a video processing apparatus 10 according to an embodiment of the present disclosure. The video processing apparatus 10 includes:
a video frame sequence obtaining module 110, configured to obtain N video frame sequences of an input video, where each video frame sequence includes at least one video frame image, and N is an integer greater than 1;
a video frame sequence extraction module 120, configured to obtain an i^{th} video frame sequence and an (i-1)^{th} video frame sequence from the N video frame sequences; where the i^{th} video frame sequence and the (i-1)^{th} video frame sequence are adjacent in the target video, where i is an integer greater than 2 and smaller than or equal to N;
a video frame image obtaining module 130, configured to obtain a first video frame image from the i^{th} video frame sequence, and obtain a second video frame image from the (i-1)^{th} video frame sequence, the first video frame image corresponding to a first image attribute, and the second video frame image corresponding to a second image attribute;
a computational complexity obtaining module 140, configured to obtain first computational complexity corresponding to the (i-1)^{th} video frame sequence, where the first computational complexity is used to represent computational complexity required to encode and/or decode the (i-1)^{th} video frame sequence; and
an encoding parameter determination module 150, configured to determine an encoding parameter of the i^{th} video frame sequence according to at least one of the first computational complexity, the first image attribute, and the second image attribute.

In one embodiment, the video processing apparatus 10 further includes:
a video frame sequence encoding module 160, configured to encode the i^{th} video frame sequence based on the encoding parameter of the i^{th} video frame sequence, to obtain an i^{th} encoded video segment.

When the video processing apparatus provided by this embodiment of this application performs video encoding on the input video, if the scene in the input video is unique and fixed, the video encoding parameter is matched according to the scene, and the input video is encoded based on the matched video encoding parameter. In this way, the encoding parameter can meet the encoding requirement of the current video frame sequence, to improve frame output stability and reduce server deployment costs. If the input video includes multiple scenes, the input video is segmented according to scene changes, to obtain N video frame sequences, and an encoding task of the input video is divided into encoding of the N video frame sequences that form the input video; and when encoding a current video frame sequence, an encoding parameter of the current video frame sequence is adaptively adjusted according to at least one of server computational complexity consumed to encode a previous video frame sequence, a first image attribute of a first video frame image in the current video frame sequence, and a second image attribute of a second video frame image in the previous video frame sequence, so that the adjusted encoding parameter can meet the encoding requirement of the current video frame sequence, to improve frame output stability and reduce server deployment costs.

In an optional embodiment of the video processing apparatus provided by the corresponding embodiment of FIG. 20 of this application, referring to FIG. 21, the encoding parameter includes a coding unit division depth. The encoding parameter determination module 150 includes a coding unit division depth adjustment submodule 151. The coding unit division depth adjustment submodule 151 is configured to:
obtain a second coding unit division depth of the (i-1)^{th} video frame sequence; and
in a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, adjust, according to the second coding unit division depth, the first coding unit division depth of the i^{th} video frame sequence to be lower than the second coding unit division depth;
in a case that the first computational complexity is greater than the second computational complexity threshold and less than the first computational complexity threshold, and the attribute level of the first image attribute is equal to that of the second image attribute, maintain the first coding unit division depth of the i^{th} video frame sequence to be the same as the second coding unit division depth of the (i-1)^{th} video frame sequence; or
in a case that the first computational complexity is less than the second computational complexity threshold, or in a case that the first computational complexity is greater than the second computational complexity threshold and less than the first computational complexity threshold, and the attribute level of the first image attribute is lower than that of the second image attribute, adjust, according to the second coding unit division depth, the first coding unit division depth of the i^{th} video frame sequence to be higher than the second coding unit division depth.

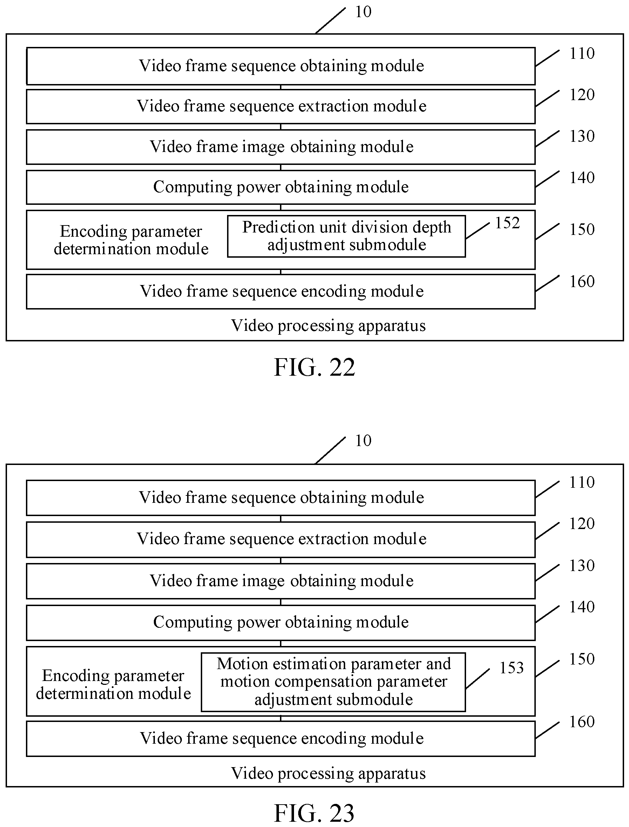

In an optional embodiment of the video processing apparatus provided by the corresponding embodiment of FIG. 20 of this application, referring to FIG. 22, the encoding parameter includes a prediction unit division depth. The encoding parameter determination module 150 includes a prediction unit division depth adjustment submodule 152. The prediction unit division depth adjustment submodule 152 is configured to:
obtain a second prediction unit division depth of the (i-1)^{th} video frame sequence; and
in a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, adjust, according to the second prediction unit division depth, the first prediction unit division depth of the i^{th} video frame sequence to be lower than the second prediction unit division depth;
in a case that the first computational complexity is greater than the second computational complexity threshold and less than the first computational complexity threshold, and the attribute level of the first image attribute is equal to that of the second image attribute, maintain the first prediction unit division depth of the i^{th} video frame sequence to be the same as the second prediction unit division depth of the (i-1)^{th} video frame sequence; or
in a case that the first computational complexity is less than the second computational complexity threshold, or in a case that the first computational complexity is greater than the second computational complexity threshold and less than the first computational complexity threshold, and the attribute level of the first image attribute is lower than that of the second image attribute, adjust, according to the second prediction unit division depth, the first prediction unit division depth of the i^{th} video frame sequence to be higher than the second prediction unit division depth.

In an optional embodiment of the video processing apparatus provided by the corresponding embodiment of FIG. 20 of this application, referring to FIG. 23, the encoding parameter includes a motion estimation parameter and a motion compensation parameter. The encoding parameter determination module 150 includes a motion estimation parameter and motion compensation parameter adjustment submodule 153. The motion estimation parameter and motion compensation parameter adjustment submodule 153 is configured to:
obtain a second motion estimation parameter and a second motion compensation parameter of the (i-1)^{th} video frame sequence; and
in a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, adjust the first motion estimation parameter of the i^{th} video frame sequence according to the second motion estimation parameter and adjust the first motion compensation parameter of the i^{th} video frame sequence according to the second motion compensation parameter;
where the first motion estimation parameter is determined based on a first maximum pixel range that is used for motion search control and a first sub-pixel estimation complexity, the second motion estimation parameter is determined based on a second maximum pixel range that is used for motion search control and a second sub-pixel estimation complexity, the first maximum pixel range is smaller than the second maximum pixel range, and the first sub-pixel estimation complexity is smaller than the second sub-pixel estimation complexity; the first motion compensation parameter is determined based on a first search range, and the second motion compensation parameter is determined based on a second search range; and the first search range is smaller than the second search range;
in a case that the first computational complexity is greater than the second computational complexity threshold and less than the first computational complexity threshold, and the attribute level of the first image attribute is equal to that of the second image attribute, maintain the first motion estimation parameter of the i^{th} video frame sequence to be the same as the second motion estimation parameter of the (i-1)^{th} video frame sequence; and maintain the first motion compensation parameter of the i^{th} video frame sequence to be the same as the second motion compensation parameter of the (i-1)^{th} video frame sequence;
where the first maximum pixel range is equal to the second maximum pixel range, and the first sub-pixel estimation complexity is equal to the second sub-pixel estimation complexity; and the first search range is equal to the second search range; or
when the first computational complexity is less than a second computational complexity threshold, or when the first computational complexity is greater than a second computational complexity threshold and less than the first computational complexity threshold, and an attribute level of the first image attribute is lower than that of the second image attribute, adjust the first motion estimation parameter of the i^{th} video frame sequence according to the second motion estimation parameter and adjust the first motion compensation parameter of the i^{th} video frame sequence according to the second motion compensation parameter;
where the first maximum pixel range is greater than the second maximum pixel range, and the first sub-pixel estimation complexity is greater than the second sub-pixel estimation complexity; and the first search range is larger than the second search range.

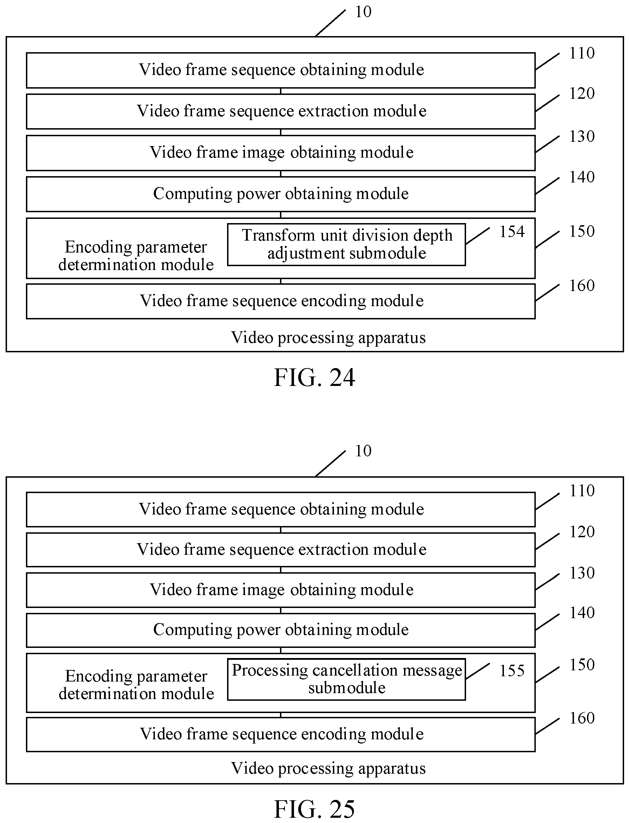

In an optional embodiment of the video processing apparatus provided by the corresponding embodiment of FIG. 20 of this application, referring to FIG. 24, the encoding parameter includes a transform unit division depth. The encoding parameter determination module 150 includes a transform unit division depth adjustment submodule 154. The transform unit division depth adjustment submodule 154 is configured to:
obtain a second transform unit division depth of the (i-1)^{th} video frame sequence; and
in a case that the first computational complexity is greater than a first computational complexity threshold, or in a case that the first computational complexity is greater than a second computational complexity threshold and less than the first computational complexity threshold, and an attribute level of the first image attribute is higher than that of the second image attribute, adjust, according to the second transform unit division depth, the first transform unit division depth of the i^{th} video frame sequence to be lower than the second transform unit division depth;
in a case that the first computational complexity is greater than the second computational complexity threshold and less than the first computational complexity threshold, and the attribute level of the first image attribute is equal to that of the second image attribute, maintain the first transform unit division depth of the i^{th} video frame sequence to be the same as the second transform unit division depth of the (i-1)^{th} video frame sequence; or
in a case that the first computational complexity is less than the second computational complexity threshold, or in a case that the first computational complexity is greater than the second computational complexity threshold and less than the first computational complexity threshold, and the attribute level of the first image attribute is lower than that of the second image attribute, adjust, according to the second transform unit division depth, the first transform unit division depth of the i^{th} video frame sequence to be higher than the second transform unit division depth.

In an optional embodiment of the video processing apparatus provided by the embodiment corresponding to FIG. 20 of this application, the encoding parameter of the i^{th} video frame sequence includes the first coding unit division depth, the first prediction unit division depth, the first transform unit division depth, the first maximum pixel range, the first sub-pixel estimation complexity, and the first search range. The video frame sequence encoding module 160 is specifically configured to:
obtain a target video frame image and a target reference image of the target video frame image from the i^{th} video frame sequence, where the target reference image is obtained after encoding a video frame image preceding the target video frame image;
perform coding unit depth division on the target video frame image according to the first coding unit division depth, to obtain K first coding units, where K is an integer greater than or equal to 1;
perform prediction unit depth division on the K first coding units according to the first prediction unit division depth, to obtain K×L first prediction units, where L is an integer greater than or equal to 1;
perform coding unit depth division on the target reference image according to the first coding unit division depth, to obtain K reference coding units, where the K first coding units correspond to the K reference coding units;
perform prediction unit depth division on the K reference coding units according to the first prediction unit division depth, to obtain K×L reference prediction units, where the K×L first prediction units correspond to the K×L reference prediction units;
perform motion estimation processing on the K×L first prediction units and the K×L reference prediction units according to the first maximum pixel range and the first sub-pixel estimation complexity, to generate K×L first motion estimation units;
perform motion compensation processing on the K×L first motion estimation units and the K×L reference prediction units according to the first search range, to generate a target inter-frame prediction image;
generate a residual image according to the target video frame image and the target inter-frame prediction image;
perform transform unit division on the residual image according to the first transform unit division depth, to generate a transformed image;
quantize the transformed image to generate a residual coefficient; and
perform entropy encoding on the residual coefficient to generate an encoded value of the target video frame image.

In an optional embodiment of the video processing apparatus provided by the embodiment corresponding to FIG. 20 of this application, the video frame sequence encoding module 160 is further configured to:
perform inverse quantization and inverse transform on the residual coefficient, to generate a reconstructed image residual coefficient;
generate a reconstructed image based on the reconstructed image residual coefficient and the target inter-frame prediction image;
process the reconstructed image through a deblocking filter to generate a first filtered image, where the deblocking filter is configured to perform horizontal filtering on vertical edge of the reconstructed image and perform vertical filtering on horizontal edge of the reconstructed image; and
process the first filtered image through a sampling adaptive offset filter, to generate a reference image corresponding to the target video frame image, where the reference image is used to encode a next frame image of the target video frame image, and the sampling adaptive offset filter is configured to perform band offset and edge offset on the first filtered image.

The apparatus provided by this embodiment of this application uses, as the reference image in the encoding process of the next frame, the reference image generated based on the target video frame image, which improves the video encoding process of the i^{th} video frame sequence and improves frame output stability.

In an optional embodiment of the video processing apparatus provided by the corresponding embodiment of FIG. 20 of this application, referring to FIG. 25, the encoding parameter determination module 150 includes a processing cancellation message submodule 155. The processing cancellation message submodule 155 is configured to:
in a case that the first computational complexity is greater than the first computational complexity threshold, or in a case that the first computational complexity is greater than the second computational complexity threshold and less than the first computational complexity threshold, and the attribute level of the first image attribute is higher than that of the second image attribute, cancel one or more of denoising processing, sharpening processing, and time domain filtering processing of the i^{th} video frame sequence according to the processing cancellation message.

In an optional embodiment of the video processing apparatus provided by the embodiment corresponding to FIG. 20 of this application, the video frame image obtaining module 120 is further configured to:
determine first scene complexity information of the first video frame image and second scene complexity information of the second video frame image through a picture scene classification model according to the first video frame image and the second video frame image;
determine first texture complexity information of the first video frame image and second texture complexity information of the second video frame image through a picture texture classification model according to the first video frame image and the second video frame image; and
generate the first image attribute according to the first scene complexity information and the first texture complexity information, and generate the second image attribute according to the second scene complexity information and the second texture complexity information.

In an optional embodiment of the video processing apparatus provided by the embodiment corresponding to FIG. 20 of this application, the video frame sequence encoding module 160 is further configured to:
calculate computational complexity consumed to encode the i^{th} video frame sequence, to obtain the second computational complexity;
obtain an (i+1)^{th} video frame sequence from the N video frame sequences, where the i^{th} video frame sequence and the (i+1)^{th} video frame sequence are adjacent in the target video;
obtain a third video frame image from the (i+1)^{th} video frame sequence, where the third video frame image corresponds to a third image attribute; and
determine an encoding parameter of the (i+1)^{th} video frame sequence according to at least one of the second computational complexity, the first image attribute, and the third image attribute.

In an optional embodiment of the video processing apparatus provided by the embodiment corresponding to FIG. 20 of this application, the video frame sequence obtaining module 110 is specifically configured to:
obtain the input video;
perform scene recognition on the input video through a scene recognition model, to obtain N scenes, where the scene recognition model is used to identify scenes appearing in the input video; and
segment the input video according to the N scenes, to obtain the N video segments.

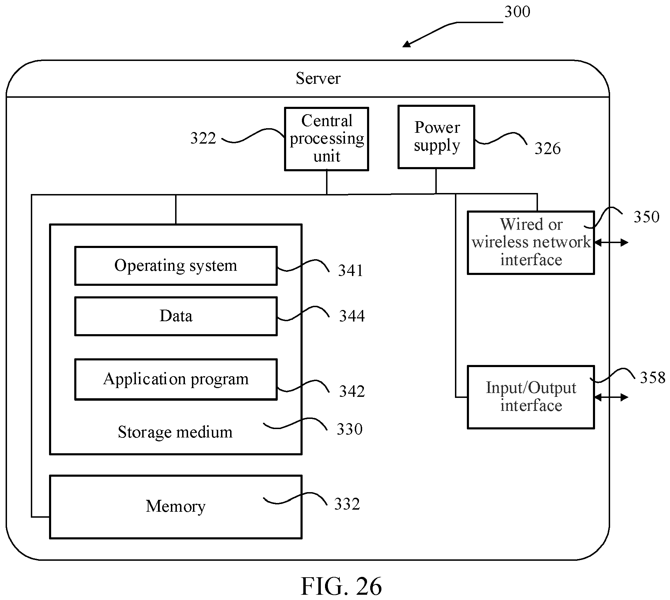

FIG. 26 is a schematic structural diagram of a server according to an embodiment of this application. The server 300 may greatly differ as configuration or performance differs, may include one or more central processing units (CPU) 322 (for example, one or more processors), a memory 332, and one or more storage mediums 330 storing an application program 342 or data 344 (for example, one or more mass storage devices). The memory 332 and the storage medium 330 may be used for transient storage or permanent storage. A program stored in the storage medium 330 may include one or more modules (which are not marked in the figure), and each module may include a series of instruction operations on the server. Further, the central processing unit 322 may be set to communicate with the storage medium 330, and execute, on the server 300, a series of instructions and operations in the storage medium 330.

The server 300 may further include one or more power supplies 326, one or more wired or wireless network interfaces 350, one or more input/output interfaces 358, and/or one or more operating systems 341 such as Windows Server^{™}, Mac OS X^{™}, Unix^{™}, Linux^{™}, and FreeBSD^{™}.

The operations performed by the server in the foregoing embodiment may be based on the server structure shown in FIG. 26.

A person skilled in the art can clearly understand that for convenience and conciseness of description, for specific working processes of the foregoing systems, devices and units, reference may be made to the corresponding processes in the foregoing method embodiments, and details are not described herein again.

In the several embodiments provided in this application, the disclosed system, apparatus, and method may be implemented in other manners. For example, the described apparatus embodiments are merely schematic. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and components displayed as units may or may not be physical units, that is, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the related art, all or a part of the technical solutions may be implemented in a form of a software product. The computer software product is stored in a storage medium, and includes several instructions for instructing a computer device (which may be a personal computer, a server, a network device, or the like) to perform all or a part of the operations of the method embodiments of this application. The foregoing storage medium includes any medium that can store program code, such as a USB flash drive, a removable hard disk, a read-only memory (ROM), a random access memory (RAM), a magnetic disk, or an optical disc.
the foregoing embodiments are merely used for describing the technical solutions of this application, but are not intended to limit this application. Although this application is described in detail with reference to the foregoing embodiments, it is appreciated by a person skilled in the art that, modifications may still be made to the technical solutions described in the foregoing embodiments, or equivalent replacements may be made to the part of the technical features; as long as such modifications or replacements do not cause the essence of corresponding technical solutions to depart from the spirit and scope of the technical solutions of the embodiments of this application.

## Claims

1. A video processing method, executable by a computer device, comprising:
obtaining N video frame sequences of an input video, each of the N video frame sequences comprising at least one video frame image, and N being an integer greater than 1;
obtaining, from the N video frame sequences, an i-th video frame sequence and an (i-1)-th video frame sequence adjacent to the i-th video frame sequence, i being an integer greater than 2 and smaller than or equal to N;
obtaining a first video frame image from the i-th video frame sequence, and obtaining a second video frame image from the (i-1)-th video frame sequence, the first video frame image having a first image attribute, and the second video frame image having a second image attribute;
obtaining first computational complexity corresponding to the (i-1)-th video frame sequence, the first computational complexity indicating an amount of computational resources required to encode and/or decode the (i-1)-th video frame sequence; and
determining an encoding parameter for encoding the i-th video frame sequence according to one or more or all of the first computational complexity, the first image attribute, and the second image attribute.

2. The video processing method according to claim 1, wherein the encoding parameter comprises a coding unit division depth; and
wherein the determining an encoding parameter for encoding the i-th video frame sequence according to one or more or all of the first computational complexity, the first image attribute, and the second image attribute comprises:
obtaining a second coding unit division depth of the (i-1)-th video frame sequence; and
modifying a first coding unit division depth of the i-th video frame sequence to be lower than the second coding unit division depth, in a case that the first computational complexity is greater than a first computational complexity threshold, or in a case that the first computational complexity is greater than a second computational complexity threshold and less than the first computational complexity threshold, and an attribute level of the first image attribute is higher than an attribute level of the second image attribute.

3. The video processing method according to claim 1 or 2, wherein the encoding parameter comprises a prediction unit division depth; and
wherein the determining an encoding parameter for encoding the i-th video frame sequence according to one or more or all of the first computational complexity, the first image attribute, and the second image attribute comprises:
obtaining a second prediction unit division depth of the (i-1)-th video frame sequence; and
modifying a first prediction unit division depth of the i-th video frame sequence to be lower than the second prediction unit division depth, in a case that the first computational complexity is greater than a first computational complexity threshold, or in a case that the first computational complexity is greater than a second computational complexity threshold and less than the first computational complexity threshold, and an attribute level of the first image attribute is higher than an attribute level of the second image attribute,.

4. The video processing method according to any one of claims 1 to 3, wherein the encoding parameter comprises a motion estimation parameter and a motion compensation parameter; and
wherein the determining an encoding parameter for encoding the i-th video frame sequence according to one or more or all of the first computational complexity, the first image attribute, and the second image attribute comprises:
obtaining a second motion estimation parameter and a second motion compensation parameter of the (i-1)-th video frame sequence; and
modifying a first motion estimation parameter of the i-th video frame sequence according to the second motion estimation parameter and modifying a first motion compensation parameter of the i-th video frame sequence according to the second motion compensation parameter, in a case that the first computational complexity is greater than a first computational complexity threshold, or in a case that the first computational complexity is greater than a second computational complexity threshold and less than the first computational complexity threshold, and an attribute level of the first image attribute is higher than an attribute level of the second image attribute;
wherein the first motion estimation parameter is determined based on a first maximum pixel range for motion search control and a first sub-pixel estimation complexity, the second motion estimation parameter is determined based on a second maximum pixel range for motion search control and a second sub-pixel estimation complexity, the first maximum pixel range is smaller than the second maximum pixel range, and the first sub-pixel estimation complexity is lower than the second sub-pixel estimation complexity; and the first motion compensation parameter is determined based on a first search range, the second motion compensation parameter is determined based on a second search range, and the first search range is smaller than the second search range.

5. The video processing method according to any one of claims 1 to 4, wherein the encoding parameter comprises a transform unit division depth; and
wherein the determining an encoding parameter for encoding the i-th video frame sequence according to one or more or all of the first computational complexity, the first image attribute, and the second image attribute comprises:
obtaining a second transform unit division depth of the (i-1)-th video frame sequence; and
modifying a first transform unit division depth of the i-th video frame sequence to be lower than the second transform unit division depth, in a case that the first computational complexity is greater than a first computational complexity threshold, or in a case that the first computational complexity is greater than a second computational complexity threshold and less than the first computational complexity threshold, and an attribute level of the first image attribute is higher than an attribute level of the second image attribute.

6. The video processing method according to any one of claims 1 to 5, wherein the determining an encoding parameter for encoding the i-th video frame sequence according to one or more or all of the first computational complexity, the first image attribute, and the second image attribute comprises:
maintaining the encoding parameter of the i-th video frame sequence to be the same as the encoding parameter of the (i-1)-th video frame sequence, in a case that the first computational complexity is greater than a second computational complexity threshold and less than a first computational complexity threshold, and an attribute level of the first image attribute is equal to an attribute level of the second image attribute.

7. The video processing method according to any one of claims 1 to 6, wherein the encoding parameter comprises a coding unit division depth; and
wherein the determining an encoding parameter for encoding the i-th video frame sequence according to one or more or all of the first computational complexity, the first image attribute, and the second image attribute comprises:
obtaining a second coding unit division depth of the (i-1)-th video frame sequence; and
adjusting a first coding unit division depth of the i-th video frame sequence to be higher than the second coding unit division depth, in a case that the first computational complexity is less than a second computational complexity threshold, or in a case that the first computational complexity is greater than the second computational complexity threshold and less than a first computational complexity threshold, and an attribute level of the first image attribute is lower than an attribute level of the second image attribute,.

8. The video processing method according to any one of claims 1 to 7, wherein the encoding parameter comprises a prediction unit division depth; and
wherein the determining an encoding parameter for encoding the i-th video frame sequence according to one or more or all of the first computational complexity, the first image attribute, and the second image attribute comprises:
obtaining a second prediction unit division depth of the (i-1)-th video frame sequence; and
modifying a first prediction unit division depth of the i-th video frame sequence to be higher than the second prediction unit division depth, in a case that the first computational complexity is less than a second computational complexity threshold, or in a case that the first computational complexity is greater than the second computational complexity threshold and less than a first computational complexity threshold, and an attribute level of the first image attribute is lower than an attribute level of the second image attribute.

9. The video processing method according to any one of claims 1 to 8, wherein the encoding parameter comprises a motion estimation parameter and a motion compensation parameter; and
wherein the determining an encoding parameter for encoding the i-th video frame sequence according to one or more or all of the first computational complexity, the first image attribute, and the second image attribute comprises:
obtaining a second motion estimation parameter and a second motion compensation parameter of the (i-1)-th video frame sequence; and
modifying a first motion estimation parameter of the i-th video frame sequence according to the second motion estimation parameter and modifying a first motion compensation parameter of the i-th video frame sequence according to the second motion compensation parameter, in a case that the first computational complexity is less than a second computational complexity threshold, or in a case that the first computational complexity is greater than the second computational complexity threshold and less than a first computational complexity threshold, and an attribute level of the first image attribute is lower than an attribute level of the second image attribute;
wherein the first motion estimation parameter is determined based on a first maximum pixel range for motion search control and a first sub-pixel estimation complexity, the second motion estimation parameter is determined based on a second maximum pixel range for motion search control and a second sub-pixel estimation complexity, the first maximum pixel range is greater than the second maximum pixel range, and the first sub-pixel estimation complexity is higher than the second sub-pixel estimation complexity; and the first motion compensation parameter is determined based on a first search range, the second motion compensation parameter is determined based on a second search range, and the first search range is greater than the second search range.

10. The video processing method according to any one of claims 1 to 9, wherein the encoding parameter comprises a transform unit division depth; and
wherein the determining an encoding parameter for encoding the i-th video frame sequence according to one or more or all of the first computational complexity, the first image attribute, and the second image attribute comprises:
obtaining a second transform unit division depth of the (i-1)-th video frame sequence; and
modifying a first transform unit division depth of the i-th video frame sequence to be higher than the second transform unit division depth, in a case that the first computational complexity is less than a second computational complexity threshold, or in a case that the first computational complexity is greater than the second computational complexity threshold and less than a first computational complexity threshold, and an attribute level of the first image attribute is lower than an attribute level of the second image attribute.

11. The video processing method according to any one of claims 1 to 10, further comprising:
encoding the i-th video frame sequence based on the encoding parameter of the i-th video frame sequence, to obtain an i-th encoded video segment.

12. The video processing method according to claim 11, wherein the encoding parameter of the i-th video frame sequence comprises a first coding unit division depth, a first prediction unit division depth, a first transform unit division depth, a first maximum pixel range, a first sub-pixel estimation complexity, and a first search range; and
wherein the encoding the i-th video frame sequence based on the encoding parameter of the i⁻th video frame sequence comprises:
obtaining a target video frame image and a reference image of the target video frame image from the i-th video frame sequence, wherein the reference image is obtained by encoding a video frame image preceding the target video frame image;
performing coding unit depth division on the target video frame image according to the first coding unit division depth, to obtain K first coding units, wherein K is an integer greater than or equal to 1;
performing prediction unit depth division on the K first coding units according to the first prediction unit division depth, to obtain K×L first prediction units, wherein L is an integer greater than or equal to 1;
performing coding unit depth division on the reference image according to the first coding unit division depth, to obtain K reference coding units, wherein the K first coding units correspond to the K reference coding units;
performing prediction unit depth division on the K reference coding units according to the first prediction unit division depth, to obtain K×L reference prediction units, wherein the K×L first prediction units correspond to the K×L reference prediction units;
performing motion estimation on the K×L first prediction units and the K×L reference prediction units according to the first maximum pixel range and the first sub-pixel estimation complexity, to generate K×L first motion estimation units;
performing motion compensation on the K×L first motion estimation units and the K×L reference prediction units according to the first search range, to generate a target inter-frame prediction image;
generating a residual image according to the target video frame image and the target inter-frame prediction image;
performing transform unit division on the residual image according to the first transform unit division depth, to generate a transformed image;
quantizing the transformed image to generate a residual coefficient; and
performing entropy encoding on the residual coefficient to generate an encoded value of the target video frame image.

13. The video processing method according to claim 12, wherein after generating the residual coefficient, the method further comprises:
performing inverse quantization and inverse transform on the residual coefficient, to generate a reconstructed image residual coefficient;
generating a reconstructed image based on the reconstructed image residual coefficient and the target inter-frame prediction image;
processing the reconstructed image through a deblocking filter to generate a first filtered image, wherein the deblocking filter is configured to perform horizontal filtering on a vertical edge of the reconstructed image and perform vertical filtering on a horizontal edge of the reconstructed image; and
processing the first filtered image through a sampling adaptive offset filter, to generate a reference image of the target video frame image, wherein the reference image is used to encode a next frame image of the target video frame image, and the sampling adaptive offset filter is configured to perform band shift and edge shift on the first filtered image.

14. The video processing method according to any one of claims 1 to 13, wherein the encoding parameter comprises a processing cancellation message; and
wherein the determining an encoding parameter for encoding the i-th video frame sequence according to one or more or all of the first computational complexity, the first image attribute, and the second image attribute comprises:
canceling one or more of denoising, sharpening, and time domain filtering of the i-th video frame sequence according to the processing cancellation message, in a case that the first computational complexity is greater than a first computational complexity threshold, or in a case that the first computational complexity is greater than a second computational complexity threshold and less than the first computational complexity threshold, and an attribute level of the first image attribute is higher than an attribute level of the second image attribute.

15. The video processing method according to any one of claims 1 to 14, wherein after obtaining a first video frame image from the i-th video frame sequence, and obtaining a second video frame image from the (i-1)-th video frame sequence, the method further comprises:
determining first scene complexity information of the first video frame image and second scene complexity information of the second video frame image through a picture scene classification model according to the first video frame image and the second video frame image;
determining first texture complexity information of the first video frame image and second texture complexity information of the second video frame image through a picture texture classification model according to the first video frame image and the second video frame image; and
generating the first image attribute according to the first scene complexity information and the first texture complexity information, and generating the second image attribute according to the second scene complexity information and the second texture complexity information.

16. The video processing method according to any one of claims 11 to 15, wherein after obtaining the i-th encoded video segment, the method further comprising:
calculating computational complexity consumed to encode the i-th video frame sequence, to obtain the second computational complexity;
obtaining an (i+1)-th video frame sequence from the N video frame sequences, wherein the i-th video frame sequence is adjacent to the (i+1)-th video frame sequence in the target video;
obtaining a third video frame image from the (i+1)-th video frame sequence, wherein the third video frame image has a third image attribute; and
determining an encoding parameter of the (i+1)-th video frame sequence according to at least one of the second computational complexity, the first image attribute, and the third image attribute.

17. The video processing method according to any one of claims 1 to 16, wherein the obtaining N video frame sequences of an input video comprises:
obtaining the input video;
performing scene recognition on the input video through a scene recognition model, to obtain N scenes, wherein the scene recognition model is configured to recognize scenes appearing in the input video; and
segmenting the input video according to the N scenes, to obtain the N video segments.

18. A video processing apparatus, comprising:
a video frame sequence obtaining module, configured to obtain N video frame sequences of an input video, each video frame sequence comprising at least one video frame image, and N being an integer greater than 1;
a video frame sequence extraction module, configured to obtain an i^{th} video frame sequence and an adjacent (i-1)^{th} video frame sequence of the i^{th} video frame sequence from the N video frame sequences, i being an integer greater than 1;
a video frame image obtaining module, configured to obtain a first video frame image from the i^{th} video frame sequence, and obtain a second video frame image from the (i-1)^{th} video frame sequence, the first video frame image corresponding to a first image attribute, and the second video frame image corresponding to a second image attribute;
a computing power obtaining module, configured to obtain first computing power corresponding to the (i-1)^{th} video frame sequence, the first computing power being used to represent computing power required to encode and/or decode the (i-1)^{th} video frame sequence; and
an encoding parameter determination module, configured to determine a video encoding parameter of the i^{th} video frame sequence according to at least one of the first computing power, the first image attribute, and the second image attribute.

19. A computer device, comprising: a memory, a transceiver, a processor, and a bus system,
the memory being configured to store a program;
the processor being configured to execute the program in the memory, to perform the video processing method according to any one of claims 1 to 17; and
the bus system being configured to connect the memory and the processor, causing the memory to communicate with the processor.

20. A computer-readable storage medium, comprising instructions, when being run on a computer, the instructions enabling the computer to perform the video processing method according to any one of claims 1 to 17.

21. A computer program product, comprising a computer program, when the computer program is executed by a processor, the video processing method according to any one of claims 1 to 17 being performed.
